# EUROPEAN PATENT SPECIFICATION

(11) **EP 1 988 364 B1**
(45) Date of publication and mention of the grant of the patent: **19.10.2016**
(21) Application number: 06843598.1
(22) Date of filing: 28.12.2006
(51) Int. Cl.: G01C 22/00, A61B 5/11, G06M 3/00, G01P 15/09

(54) **BODY MOTION DETECTION DEVICE**
KÖRPERBEWEGUNGSDETEKTIONSEINRICHTUNG
DISPOSITIF DE DETECTION DE MOUVEMENT DU CORPS

(30) Priority: 15.02.2006 JP 2006038002
(43) Date of publication of application: 05.11.2008
(73) Proprietor: Omron Healthcare Co., Ltd., Muko-shi, Kyoto 617-0002 (JP)
(72) Inventor: HASHINO, Kenji, Muko-shi, Kyoto 617-0002 (JP); KUBO, Nobuo, Muko-shi, Kyoto 617-0002 (JP); MIYATA, Kiichiro, Muko-shi, Kyoto 617-0002 (JP)
(74) Representative: Kilian Kilian & Partner
(86) International application number: PCT/JP2006/326220
(87) International publication number: WO 2007/094127

(56) References cited:
- EP-A1- 1 199 544
- EP-A2- 0 908 363
- WO-A1-2005/039412
- JP-A- 07 225 242
- JP-A- 11 108 948
- JP-A- 2002 191 580
- JP-A- 2005 157 465
- JP-A- 2005 174 235
- US-A1- 2002 152 645

## Description

### TECHNICAL FIELD

The present invention relates to a body motion detector for detecting the body motion of a body by being attached to the body, more specifically, to a pedometer capable of counting the number of steps by detecting the body motion of the body.

### BACKGROUND ART

A pedometer for detecting the body motion of the body by being attached to the body, and measuring the number of steps based on the detected body motion information is conventionally known. In the pedometer, a body motion detecting unit for detecting the body motion of the body is arranged inside a body casing. Various types of body motion detecting units are being used, one of which is to use a sensor unit including a plate shaped member of cantilever structure and a piezoelectric element arranged on the plate shaped member as the body motion detecting unit. In the body motion detecting unit of such configuration, strain occurs at the piezoelectric element when the plate shaped member bends with the body motion, and the body motion is detected by capturing the voltage fluctuation caused by such strain. Documents disclosing a pedometer equipped with the body motion detecting unit of the above configuration include Japanese Laid-Open Patent Publication No. 2002-191580 (patent document 1).

A detecting axis at which maximum sensitivity is obtained exists in the body motion detecting unit of the above configuration. The detecting axis extends in one direction, and the direction in which the detecting axis extends (hereinafter referred to as detecting axis direction) coincides with a normal direction of the main surface of a beam part (i.e., part that bends with the body motion) of the plate shaped member to be attached with the piezoelectric element. In the body motion detecting unit of the above configuration, if an inclination angle from the detecting axis is within a predetermined angle, the body motion in the relevant direction can also be detected, but if the body motion direction greatly deviates from the detecting axis direction, the beam part of the plate shaped member does not sufficiently bend, whereby strain does not sufficiently occur at the piezoelectric element, and the body motion sometimes may not be captured. Generally, the detectable range in which detection can be made by a practical body motion detecting unit of the above configuration is within a range the inclination angle from the detecting axis direction is about 30°. Therefore, the attachment state of the pedometer when carried by the user becomes very important in counting the number of steps at a satisfactory accuracy.

With the pedometer assumed to be attached to the body, the pedometer is normally attached to the waist of the user. Specifically, a clip part is arranged at the body casing of the pedometer, and the body casing is attached to the upper end of the clothes such as pants and skirt using such clip part, or the body casing is attached to the upper end of a belt worn at the waist. Therefore, the body motion detecting unit is positioned and fixed with respect to the body casing so that the detecting axis direction of the body motion detecting unit overlaps in a perpendicular direction when the pedometer is attached to the body in such mode.

However, if the user is a person whose lower part of the abdomen is sticking out as seen in many male adults or is a pregnant woman, the detecting axis direction of the body motion detecting unit sometimes becomes greatly inclined with respect to the perpendicular direction when the body casing itself is greatly tilted even in the proper attachment state. In this case, the body motion is not detected at satisfactory accuracy and the number of steps may not be accurately counted regardless of the proper attachment state.

Documents disclosing a technique capable of preventing lowering in the measurement precision due to variation in the attachment state attributed to the body shape of the user includes Japanese Laid-Open Patent Publication No. 2001-255169 (patent document 2), Japanese Laid-Open Patent Publication No. 2003-156362 (patent document 3), Japanese Laid-Open Patent Publication No. 2003-157423 (patent document 4), and the like. The techniques disclosed in patent documents 2 and 3 are both configured with a rotation mechanism arranged on a supporting part of the body motion detecting unit, so that the detecting axis direction of the body motion detecting unit is always directed in the perpendicular direction by adjusting the barycentric position of the rotating portion. The technique disclosed in patent document 4 is configured with the shape of the beam part of the plate shaped member formed to a special shape (e.g., annular shape, S-shape, C-shape, spiral-shape, cross-shape, and the like) two-dimensionally so that the detecting axis direction is not only in one direction but in a plurality of directions.

The documents disclosing a technique enabling the body motion in an arbitrary direction to be detected includes Japanese Laid-Open Patent Publication No. 61-162935 (patent document 5). The technique disclosed in patent document 5 is configured to enable detection of not only the movement in a perpendicular direction but also the movement in an arbitrary direction by attaching a thin plate of cantilever structure attached with the piezoelectric element in a state tilted by 45° from the horizontal plane in advance.

EP 0 908 363 A2 (patent document 6) discloses a pedometer comprising a pedometer unit for counting steps, an outer case for housing the pedometer unit by coupling with rotary support portions so as to be rotatable, and an angle adjustment mechanism for allowing a user to adjust the mounting angle of the pedometer unit to the outer case to his/her condition of use. The angle adjustment mechanism has a pair of engaging projections formed on opposite outer lower sides of the pedometer unit, and three pairs of recesses formed in respective positions corresponding to the projections on opposite inner lower sides of the outer case. The pedometer unit comprises an upper case containing components such as a pendulum, and a lower case for covering and protecting the components such as the pendulum.

JP 2005 174235 A (patent document 7) discloses an assembly for mounting a sensor, which measures a running state of a vehicle, on the vehicle at a predetermined positional relationship to the vehicle. The assembly includes a control unit for controlling the vehicle based on a signal transmitted from the sensor and a circuit board. The assembly further includes a case to be fixed to the vehicle for housing the circuit board and a holding member for holding the sensor at an inclination relative to the circuit board. The holding member maintains the positional relationship between the sensor and the vehicle when the case is fixed to the vehicle.
[Patent document 1] Japanese Laid-Open Patent Publication No. 2002-191580
[Patent document 2] Japanese Laid-Open Patent Publication No. 2001-255169
[Patent document 3] Japanese Laid-Open Patent Publication No. 2003-156362
[Patent document 4] Japanese Laid-Open Patent Publication No. 2003-157423
[Patent document 5] Japanese Laid-Open Patent Publication No. 61-162935
[Patent document 6] Japanese Laid-Open Patent Publication No. 2005-174235
[Patent document 7] European Patent Publication EP 0 908 363 A2

### DISCLOSURE OF THE INVENTION

### PROBLEMS TO BE SOLVED BY THE INVENTION

However, when the techniques disclosed in patent documents 2 to 4 are used, the body motion detecting unit becomes extremely large, and the pedometer becomes significantly large accompanied therewith. It is important to accurately count the number of steps in the pedometer, but it is also important to miniaturize the apparatus to be suited for carrying as it is used by being attached to the body, and thus enlargement of the body motion detecting unit needs to be avoided. Furthermore, when the techniques disclosed in patent documents 2 to 4 are used, the apparatus configuration becomes complicating, and thus the manufacturing becomes difficult and the manufacturing cost increases.

In order to actually enable the body motion in an arbitrary direction to be detectable using the technique disclosed in patent document 5, the dynamic range of the body motion detecting unit needs to be increased so that the body motion in a direction greatly tilted from the detecting axis direction can also be detected. However, the noise component contained in the signal output from the sensor needs to be effectively removed, and the gain of the signal needs to be greatly increased in order to realize a body motion detecting unit with a large dynamic range, and thus the manufacturing cost increases extremely.

In view of solving the above problems, it is an object of the present invention to provide a compact and inexpensive body motion detector in which lowering in the measurement precision due to variation in the attachment state attributed to the body shape of the user is prevented. This object is achieved by the subject-matter of the independent claims. Further advantageous embodiments of the invention are the subject-matter of the dependent claims. Aspects of the invention are set out below.

### MEANS FOR SOLVING THE PROBLEMS

A body motion detector based on a first aspect of the present invention includes a first body motion detecting unit fixed and arranged to detect a body motion in a predetermined detecting axis direction, and a body casing accommodating the first body motion detecting unit. The detecting axis of the first body motion detecting unit is arranged in an inclined manner at a first inclination angle with respect to an attachment surface to a body of the body casing; and the first inclination angle is within a detectable angle range of the first body motion detecting unit.

Here, "detecting axis of the body motion detecting unit" refers to an axis that coincides with a direction in which detection is possible at a maximum sensitivity by the body motion detecting unit, and "detectable angle range of the body motion detecting unit" indicates a range of the inclination angle from the detecting axis at which detection of vibration by the body motion detecting unit is possible. Thus, the detectable angle range normally exists by the same extent on both sides with the detecting axis in between.

Therefore, the body motion can be detected in great number of cases even when the attachment state varies due to the body shape of the user by inclining the detecting axis of the body motion detecting unit with respect to the attachment surface in advance. If the inclination angle with respect to the attachment surface of the detecting axis is within the detectable angle range, the body motion can be reliably detected even if the attachment surface is arranged so as to lie along the perpendicular direction.

In the body motion detector based on the first aspect of the present invention, the detecting axis of the first body motion detecting unit is preferably arranged so as to become closer to the attachment surface towards an upper part of the body casing.

In the body motion detector intended to have the body casing attached to the waist, the detecting axis of the body motion detecting unit is arranged in an inclined manner so as to become closer to the abdomen side of the user towards the upper part in the attachment state according to the above configuration. Therefore, the body motion can be accurately detected even with the person whose lower part of the abdomen is sticking out, pregnant woman, and the like.

In the body motion detector based on the first aspect of the present invention, the first body motion detecting unit preferably includes a plate shaped member with a beam part that bends with the body motion, and a piezoelectric element attached to a main surface of the beam part of the plate shaped member.

Therefore, a compact body motion detecting unit of a simple configuration is obtained by configuring the body motion detecting unit with the plate shaped member having the beam part and the piezoelectric element attached to the beam part, thereby contributing to miniaturization of the apparatus.

In the body motion detector based on the first aspect of the present invention, the first body motion detecting unit is preferably attached to a wiring substrate accommodated and fixed inside the body casing. Preferably, in this case, the main surface of the beam part is arranged to perpendicularly intersect the main surface of the wiring substrate; and the main surface of the wiring substrate is arranged in an inclined manner at the first inclination angle with respect to the attachment surface of the body casing. The main surface of the beam part may be arranged in an inclined manner at the first inclination angle with respect to the main surface of the wiring substrate; and the main surface of the wiring substrate may be arranged parallel to the attachment surface of the body casing.

According to such configuration, a compact body motion detector in which the detecting axis of the body motion detecting unit is arranged in an inclined manner with respect to the attachment surface is configured very easily and conveniently.

In the body motion detector based on the first aspect of the present invention, the beam part may include a weight part arranged upstanding from an end on the wiring substrate side of the beam part; in which case the weight part preferably extends in a direction of becoming farther away from the wiring substrate towards a distal end.

According to such configuration, even when the weight part that aids the bend of the beam part is arranged on the beam part, the body motion detector can be configured small while avoiding the weight part from contacting the wiring substrate.

In the body motion detector based on the first aspect of the present invention, a second body motion detecting unit fixed and arranged so as to detect a body motion in a predetermined detecting axis direction is preferably arranged; in which case the detecting axis of the second body motion detecting unit is preferably arranged in an inclined manner at a second inclination angle larger than the first inclination angle with respect to the attachment surface of the body casing. In this case, the second inclination angle is preferably set so as not to be within a detectable angle range of the second body motion detecting unit; and is preferably set so that the detectable range of the first body motion detecting unit and the detectable range of the second body motion detecting unit at least partially overlap.

Therefore, according to the configuration of arranging the second body motion detecting unit in addition to the first body motion detecting unit, and setting the detectable range of the second body motion detecting unit to partially overlap the detectable range of the first body motion detecting unit, the body motion can be detected in greater number of occasions even when the attachment state varies due to the body shape of the user.

In the body motion detector based on the first aspect of the present invention, the detecting axis of the second body motion detecting unit is preferably arranged so as to become closer to the attachment surface towards an upper part of the body casing.

In the body motion detector based on the first aspect of the present invention, the second body motion detecting unit preferably includes a plate shaped member with a beam part that bends with the body motion, and a piezoelectric element attached to a main surface of the beam part of the plate shaped member.

In the body motion detector based on the first aspect of the present invention, a selection unit for selecting which output signal output from the body motion detecting unit of the first body motion detecting unit and the second body motion detecting unit to select for the target of body motion detection is further preferably arranged.

According to such configuration, even if the same body motion is simultaneously detected by both the first body motion detecting unit and the second body motion detecting unit, the body motion detection is performed specific to the output signal output from the selected one body motion detecting unit, and thus drawbacks that might occur by partially overlapping the detectable range of the first body motion detecting unit and the detectable range of the second body motion detecting unit are prevented in advance, and an accurate and reliable body motion detection can be carried out.

A body motion detector based on a second aspect of the present invention includes a first body motion detecting unit and a second body motion detecting unit fixed and arranged so as to detect a body motion in a predetermined detecting axis direction, and a body casing accommodating the first body motion detecting unit and the second body motion unit. The detecting axis of the first body motion detecting unit is arranged parallel to an attachment surface to a body of the body casing; and the detecting axis of the second body motion detecting unit is arranged in an inclined manner at an inclination angle with respect to the attachment surface of the body casing. The inclination angle is set so as not to be within a detectable angle range of the second body motion detecting unit; and a detectable range of the first body motion detecting unit and a detectable range of the second body motion detecting unit at least partially overlap.

Therefore, according to the configuration of arranging the second body motion detecting unit in addition to the first body motion detecting unit, arranging the detecting axis of the first body motion detecting unit parallel to the attachment surface, arranging the detecting axis of the second body motion detecting unit in an inclined manner with respect to the attachment surface, and setting the detectable range of the second body motion detecting unit to partially overlap the detectable range of the first body motion detecting unit, the body motion can be detected in greater number of occasions even when the attachment state varies due to the body shape of the user. Since the detecting axis of the first body motion detecting unit is arranged to be parallel to the attachment surface, the body motion can be reliably detected even if the attachment surface is arranged so as to lie along the perpendicular direction

In the body motion detector based on the second aspect of the present invention, the detecting axis of the second body motion detecting unit is preferably arranged so as to become closer to the attachment surface towards an upper part of the body casing.

In the body motion detector based on the second aspect of the present invention, the first body motion detecting unit and the second body motion detecting unit respectively preferably includes a plate shaped member with a beam part that bends with the body motion, and a piezoelectric element attached to a main surface of the beam part of the plate shaped member.

In the body motion detector based on the second aspect of the present invention, the first body motion detecting unit and the second body motion detecting unit are preferably attached to a wiring substrate accommodated and fixed inside the body casing. Preferably, in this case, the main surface of the beam part of the second body motion detecting unit is arranged in an inclined manner at the inclination angle with respect to the main surface of the wiring substrate; and the main surface of the wiring substrate is arranged parallel to the attachment surface of the body casing.

According to such configuration, a compact body motion detector in which the detecting axis of the body motion detecting unit is arranged in an inclined manner with respect to the attachment surface is configured very easily and conveniently.

In the body motion detector based on the second aspect of the present invention, the beam part of the second body motion detecting unit includes a weight part arranged upstanding from an end of the beam part on the wiring substrate side; in which case the weight part preferably extends in a direction of becoming farther from the wiring substrate towards a distal end.

According to such configuration, even when the weight part that aids the bend of the beam part is arranged on the beam part of the second body motion unit, the body motion detector can be configured small while avoiding the weight part from contacting the wiring substrate.

In the body motion detector based on the second aspect of the present invention, a selection unit for selecting which output signal output from the body motion detecting unit of the first body motion detecting unit and the second body motion detecting unit to select for the target of body motion detection is preferably further arranged.

### EFFECT OF THE INVENTION

According to the present invention, a small and inexpensive body motion detector in which lowering in measurement precision due to variation in the attachment state attributed to the body shape of the user is prevented is obtained.

### BRIEF DESCRIPTION OF THE DRAWINGS

Fig. 1 is a schematic perspective view of when a pedometer according to a first embodiment, being a non-claimed comparative example of the present invention is in an opened state.
Fig. 2 is a side view of when the pedometer according to the first embodiment of the present invention is in the opened state.
Fig. 3 is a frame format side view of when the pedometer according to the first embodiment of the present invention is in a closed state.
Fig. 4A is a schematic perspective view of a printed circuit board after assembly describing an assembly structure to the printed circuit board of a sensor unit of the pedometer according to the first embodiment of the present invention.
Fig. 4B is a front view of the printed circuit board after assembly describing the assembly structure to the printed circuit board of the sensor unit of the pedometer according to the first embodiment of the present invention.
Fig. 4C is a side view of the printed circuit board after assembly describing the assembly structure to the printed circuit board of the sensor unit of the pedometer according to the first embodiment of the present invention.
Fig. 5 is a block diagram showing function blocks of the pedometer according to the first embodiment of the present invention.
Fig. 6 is a view showing an attachment state of when a person whose lower part of the abdomen is not sticking out attaches the pedometer according to the first embodiment of the present invention.
Fig. 7 is a view showing in frame format a tilt state of the sensor unit in the attachment state shown in Fig. 6.
Fig. 8 is a view showing an attachment state of when a person whose lower part of the abdomen is sticking out attaches the pedometer according to the first embodiment of the present invention.
Fig. 9 is a view showing in frame format a tilt state of the sensor unit in the attachment state shown in Fig. 8.
Fig. 10 is a frame format side view of when a pedometer according to a second embodiment of the present invention is in a closed state.
Fig. 11A is a schematic perspective view of a printed circuit board after assembly describing an assembly structure to the printed circuit board of a sensor unit of the pedometer according to the second embodiment of the present invention.
Fig. 11B is a front view of the printed circuit board after assembly describing an assembly structure to the printed circuit board of the sensor unit of the pedometer according to the second embodiment of the present invention.
Fig. 11C is a side view of the printed circuit board after assembly describing an assembly structure to the printed circuit board of the sensor unit of the pedometer according to the second embodiment of the present invention.
Fig. 12 is a view showing in frame format a tilt state of the sensor unit when a person whose lower part of the abdomen is not sticking out attaches the pedometer according to the second embodiment of the present invention.
Fig. 13 is a view showing in frame format a tilt state of the sensor unit when a person whose lower part of the abdomen is sticking out attaches the pedometer according to the second embodiment of the present invention.
Fig. 14 is a frame format side view of when a pedometer according to a third embodiment of the present invention is in a closed state.
Fig. 15A is a schematic perspective view of a printed circuit board after assembly describing an assembly structure to the printed circuit board of a sensor unit of the pedometer according to the third embodiment of the present invention.
Fig. 15B is a front view of the printed circuit board after assembly describing an assembly structure to the printed circuit board of the sensor unit of the pedometer according to the third embodiment of the present invention.
Fig. 15C is a side view of the printed circuit board after assembly describing an assembly structure to the printed circuit board of the sensor unit of the pedometer according to the third embodiment of the present invention.
Fig. 16 is a block diagram showing function blocks of the pedometer according to the third embodiment of the present invention.
Fig. 17 is a view showing in frame format a tilt state of the sensor unit when a person whose lower part of the abdomen is not sticking out attaches the pedometer according to the third embodiment of the present invention.
Fig. 18 is a view showing in frame format a tilt state of the sensor unit when a person whose lower part of the abdomen is sticking out attaches the pedometer according to the third embodiment of the present invention.
Fig. 19 is a view showing in frame format a tilt state of the sensor unit when a person whose lower part of the abdomen is sticking out further than in Fig. 18 attaches the pedometer according to the third embodiment of the present invention.
Fig. 20 is a frame format side view of when a pedometer according to a fourth embodiment of the present invention is in a closed state.
Fig. 21A is a schematic perspective view of a printed circuit board after assembly describing an assembly structure to the printed circuit board of a sensor unit of the pedometer according to the fourth embodiment of the present invention.
Fig. 21B is a front view of the printed circuit board after assembly describing an assembly structure to the printed circuit board of the sensor unit of the pedometer according to the fourth embodiment of the present invention.
Fig. 21C is a side view of the printed circuit board after assembly describing an assembly structure to the printed circuit board of the sensor unit of the pedometer according to the fourth embodiment of the present invention.
Fig. 22 is a view showing in frame format a tilt state of the sensor unit when a person whose lower part of the abdomen is not sticking out attaches the pedometer according to the fourth embodiment of the present invention.
Fig. 23 is a view showing in frame format a tilt state of the sensor unit when a person whose lower part of the abdomen is sticking out attaches the pedometer according to the fourth embodiment of the present invention.

### Description of symbols

- 100A to 100D: pedometer
- 110: case body
- 111: display surface
- 113: shaft supporting part
- 114: nail part
- 116: display unit
- 117: operation unit
- 120: cover body
- 121: cover surface
- 122: attachment surface
- 123: shaft supporting part
- 124: receiving part
- 125: shaft supporting part
- 130: clip body
- 131: shaft supporting part
- 132: spring
- 140: printed circuit board
- 141: mounting surface
- 142: screw hole
- 150: sensor unit
- 150A: first sensor unit
- 150B: second sensor unit
- 151, 151a, 151b: plate shaped member
- 152, 152a, 152b: fixed part
- 153, 153a, 153b: beam part
- 154, 154a, 154b, 155, 155a, 155b: weight part
- 156,: 156a, 156b piezoelectric element
- 160, 166: amplifier unit
- 161, 167: filter unit
- 162: CPU
- 162a: calculation circuit
- 163: memory unit
- 164: battery
- 165: constant voltage circuit
- 200: user
- 201: lower part of the abdomen

### BEST MODE FOR CARRYING OUT THE INVENTION

The embodiments of the present invention will be described in detail with reference to the drawings. In the embodiments described below, description will be made showing a portable pedometer intended to be attached to the waist of the user as the body motion detector. First to third embodiments described below are embodiments based on a first aspect of the present invention, and a fourth embodiment described below is an embodiment based on a second aspect of the present invention.

### (First embodiment being a comparative example, not claimed)

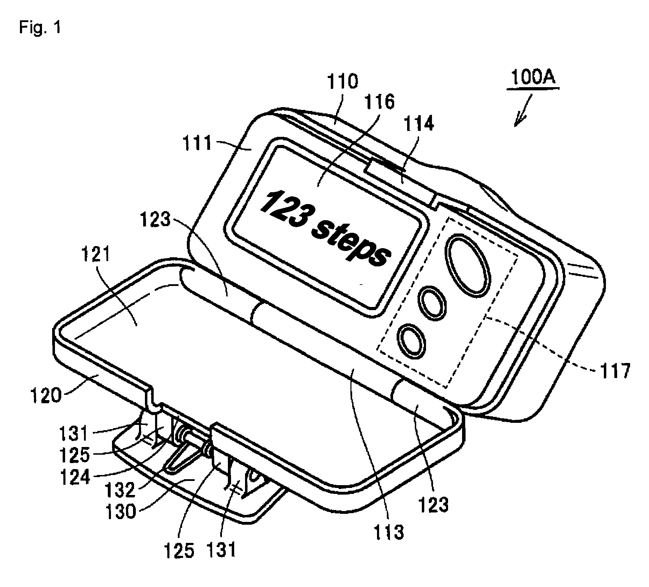

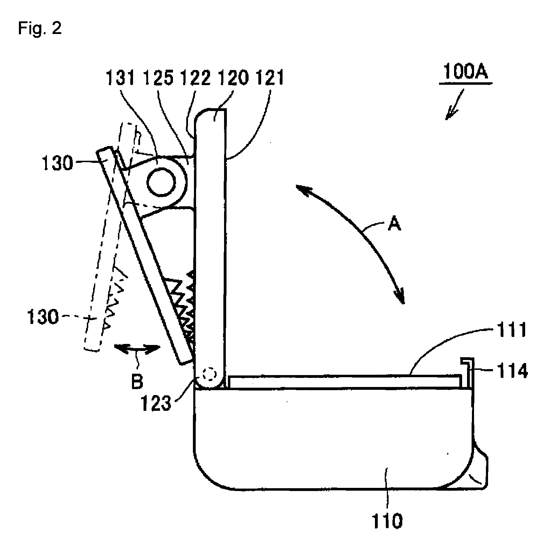

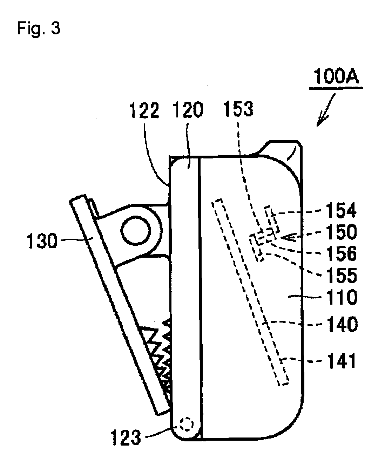

Fig. 1 and Fig. 2 are views showing an outer appearance structure of a pedometer according to a first embodiment of the present invention, where Fig. 1 is a schematic perspective view of when the pedometer is in an opened state, and Fig. 2 is a side view of when the pedometer is in the opened state. Fig. 3 is a view showing an internal structure of the pedometer according to the present embodiment, and is a frame format side view of when the pedometer is in a closed state. First, the outer appearance structure and the internal structure of the pedometer according to the present embodiment will be described with reference to such drawings.

As shown in Fig. 1 and Fig. 2, a pedometer 100A according to the present embodiment includes a compact body casing that can be carried around, which body casing is divided into a case body 110, a cover body 120, and a clip body 130.

The case body 110 includes a display surface 111 arranged with a display unit 116 for displaying various information such as counted number of steps and consumed amount of calorie, and an operation unit 117 for accepting the operation by a user. The cover body 120 includes a cover surface 121 which covers the display surface 111 of the case body 110 described above in the closed state.

A shaft supporting part 113 is arranged at the lower end of the case body 110, and a shaft supporting part 123 is arranged at the lower end of the cover body 120. A linearly extending shaft is inserted into the shaft supporting parts 113 and 123, so that the case body 110 and the cover body 120 are coupled rotatable in the direction of an arrow A shown in Fig. 2.

A nail part 114 is arranged at the upper end of the case body 110, and a receiving part 124 for receiving the nail part 114 is arranged at the upper end of the cover body 120. The display surface 111 of the case body 110 is covered by the cover surface 121 of the cover body 120 when the nail part 114 is received and engaged at the receiving part 124. Therefore, the closed state is maintained by engaging the nail part 114 to the receiving part 124 when there is no need to check the display unit 116 or to operate the operation unit 117.

The main surface on the side opposite to the cover surface 121 of the cover body 120 becomes an attachment surface 122 when attaching the body casing to the body. The clip body 130 is attached to the attachment surface 122. A shaft supporting part 125 is arranged on the attachment surface 122 of the cover body 120, and a shaft supporting part 131 is arranged on the surface of the clip body 130 facing the cover body 120. A linearly extending shaft is passed through and arranged in the shaft supporting parts 131 and 125, so that the clip body 130 is coupled to the cover body 120 rotatable in the direction of the arrow B shown in Fig. 2. A spring 132 is attached to the shaft, so that the clip body 130 is constantly biased with respect to the cover body 120 by the effect of the spring 132. Therefore, the pedometer 100A can be attached to the waist by means of the clip body 130.

As shown in Fig. 3, a printed circuit board 140 serving as a wiring substrate is accommodated and fixed inside the case body 110 of the pedometer 100A. The printed circuit board 140 is immovably fixed to the body casing, and a sensor unit 150 is attached to a mounting surface 141, which is one main surface of the printed circuit board 140. The sensor unit 150 corresponds to a first body motion detecting unit according to the first aspect of the present invention. The printed circuit board 140 has the mounting surface 141 thereof arranged in an inclined manner at a predetermined inclination angle with respect to the attachment surface 122 of the body casing. In the illustrated pedometer 100A, a case where the sensor unit 150 is attached to the main surface of the printed circuit board 140 on the side not facing the attachment surface 122 of the body casing is shown, but may be attached to the main surface of the printed circuit board 140 on the side facing the attachment surface 122 of the body casing.

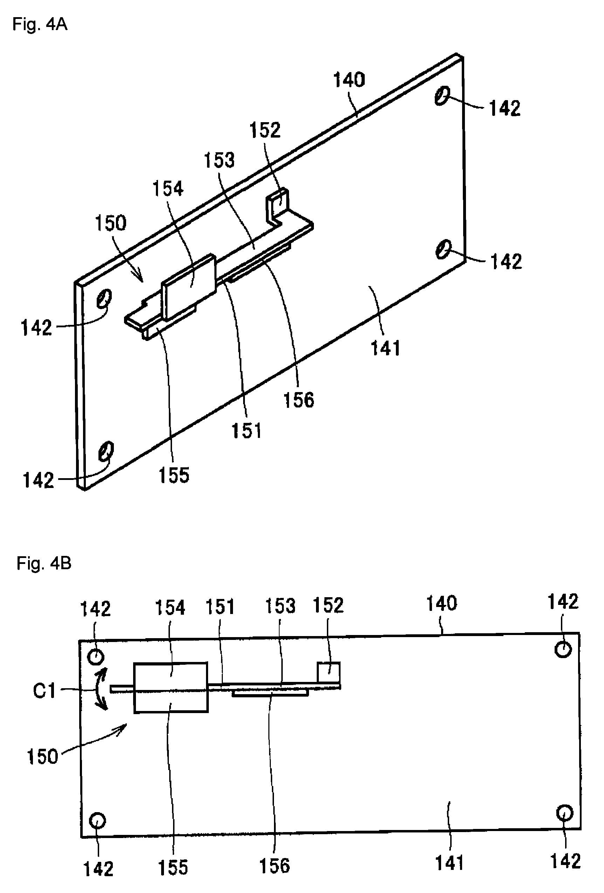

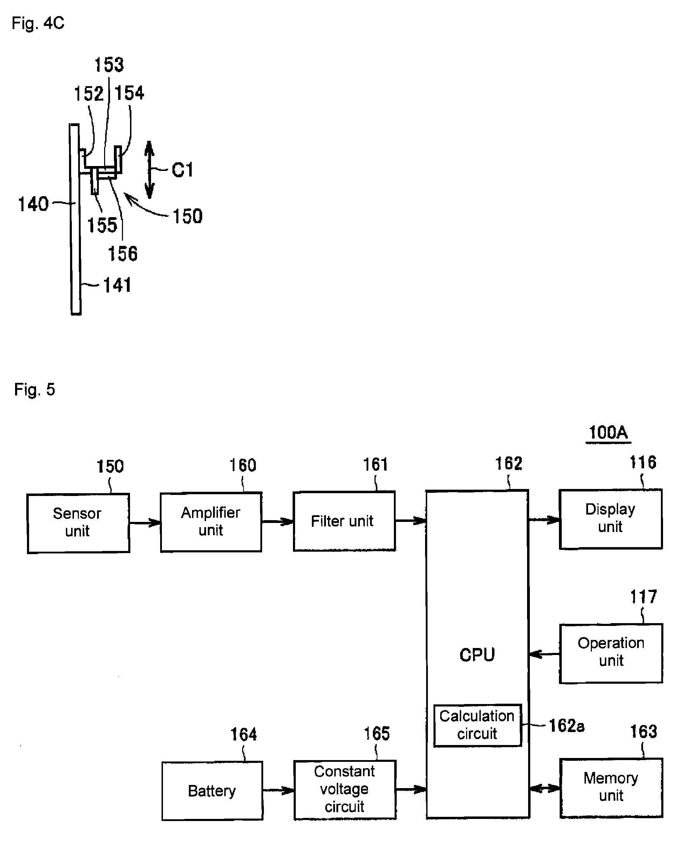

Fig. 4 is a view showing an assembly structure to the printed circuit board of the sensor unit of the pedometer according to the present embodiment. Fig. 4A is a schematic perspective view of the printed circuit board after assembly, and Fig. 4B and Fig. 4C are front view and side view, respectively, of the printed circuit board after assembly. The assembly structure of the sensor unit of the pedometer according to the present embodiment will be described with reference to such drawings.

As shown in Fig. 4A to Fig. 4C, the printed circuit board 140 is made of a plate shaped member having a substantially rectangular shape in plan view, where a circuit pattern is formed on the main surface thereof. Various circuit configuring parts are mounted on the mounting surface 141 of the printed circuit board 140 and on the main surface on the side opposite to the mounting surface 141 as necessary, whereby various function blocks to be hereinafter described are configured. A screw hole 142 is formed at a predetermined position of the printed circuit board 140, and the printed circuit board 140 is immovably fixed to the case body 110 by inserting a screw through the screw hole 142 and fixing the screw to the case body 110.

The sensor unit 150 is attached at a predetermined position of the mounting surface 141 of the printed circuit board 140. The sensor unit 150 includes a plate shaped member 151 having a cantilever structure, and a piezoelectric element 156 attached to the plate shaped member 151.

The plate shaped member 151 has an outer shape of a substantially L-shape in plan view, where a fixed part 152 or one end is immovably fixed to the printed circuit board 140, and the other end is arranged parallel along the mounting surface 141 of the printed circuit board 140 without being fixed to the printed circuit board 140. The portion of the plate shaped member 151 extending parallel to the mounting surface 141 of the printed circuit board 140 configures a beam part 153 that elastically deforms with body motion. The main surface of the beam part 153 is arranged to perpendicularly intersect the mounting surface 141 of the printed circuit board 140. Therefore, the main surface of the beam part 153 is arranged in an inclined manner at a predetermined inclination angle with respect to the attachment surface 122 of the body casing (see Fig. 3).

Weight parts 154 and 155 formed by bending the plate shaped member 151 are formed at the distal end portion of the beam part 153. The weight parts 154 and 155 are sites provided to amplify the deformation of the beam part 153 involved in the body motion. The plate shaped member 151 merely needs to be configured by a member having elasticity of an extent the beam part 153 appropriately bends with body motion, and metal plate etc. formed through press work and the like may be used.

The piezoelectric element 156 has a plate shape of a substantially rectangular shape in plan view, and is securely attached to the main surface of the beam part 153 of the plate shaped member 151. A plate shaped ceramics member etc. is used for the piezoelectric element 156. In the illustrated sensor unit 150, the piezoelectric element 156 is securely attached to the lower surface side of the beam part 153, but may be securely attached to the upper surface side.

The printed circuit board 140 fixed with the sensor unit 150 is accommodated and fixed inside the case body 110. Therefore, when the user attaches the case body 110 to the body, bend in the direction of an arrow C1 in Fig. 4B and Fig. 4C produces at the beam part 153 of the plate shaped member 151 with the body motion. The strain occurs in the piezoelectric element 156 with the bend of the beam part 153, and an electric signal corresponding to such strain is output from the piezoelectric element 156. The output electric signal is input to various circuits to be hereinafter described, and provided for the counting of number of steps.

A detecting axis at which maximum sensitivity can be obtained exists in the sensor unit 150. The direction the detecting axis extends (detecting axis direction) coincides with the normal direction of the main surface of the beam part 153 of the plate shaped member 151 attached with the piezoelectric element 156 in the above configuration (i.e., when the sensor unit 150 is configured by the plate shaped member 151 of cantilever structure and the piezoelectric element 156 having a plate shape attached to the main surface thereof). In the sensor unit 150 of the above configuration, if the inclination angle from the detecting axis is within a predetermined angle range, the body motion in the relevant direction can also be detected.

Fig. 5 is a block diagram showing function blocks of the pedometer according to the present embodiment. The function blocks of the pedometer according to the present embodiment will be described below with reference to the drawings.

As shown in Fig. 5, the pedometer 100A according to the present embodiment includes an amplifier unit 160, a filter unit 161, a CPU (Central Processing Unit) 162, a memory unit 163, a battery 164, and a constant voltage circuit 165 in addition to the display unit 116, the operation unit 117, and the sensor unit 150.

The amplifier unit 160 includes a circuit for amplifying an electric signal output from the sensor unit 150. The filter unit 161 includes a circuit for removing noise contained in the amplified electric signal output from the amplifier unit 160. The CPU 162 includes a calculation circuit 162a for counting the number of steps by performing various calculations using the electric signal output from the filter unit 161. The CPU 162 outputs a command for displaying various information such as measurement result on the display unit 116, or executes a command input from the operation unit 117.

A program for carrying out various calculation processes is stored in the memory unit 163. The battery 164 is a power supply for supplying power to the CPU 162. The constant voltage circuit 165 is a circuit for stabilizing the power supply voltage supplied from the battery 164.

As described above, the bend direction of the beam part 153 of the plate shaped member 151 configuring the sensor unit 150 is made non-parallel with respect to the attachment surface 122 of the body casing in the pedometer 100A according to the present embodiment. According to such configuration, lowering in measurement precision due to variation in the attachment state attributed to the body shape of the user can be prevented, and the body motion can be detected in greater number of occasions. The mechanism thereof will be described in detail below.

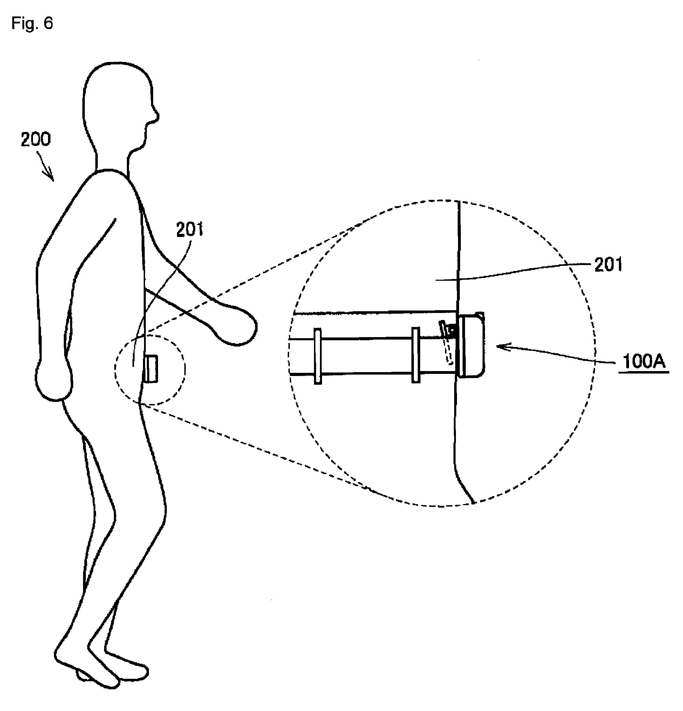

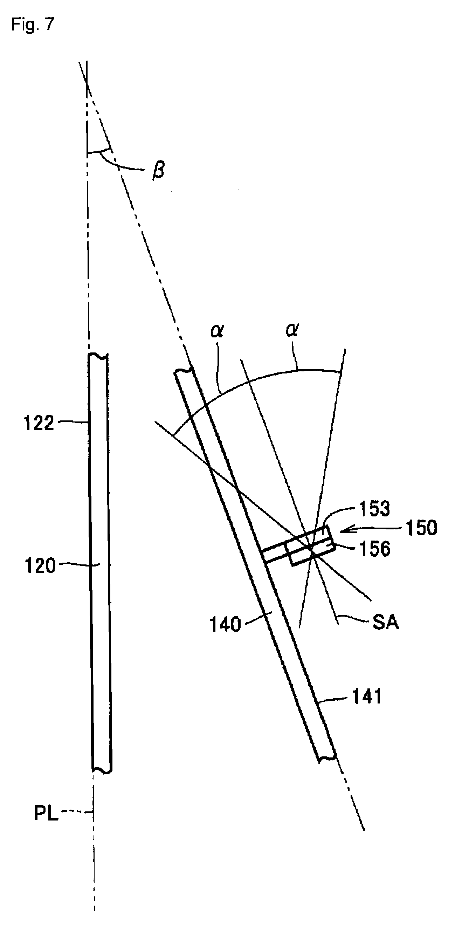

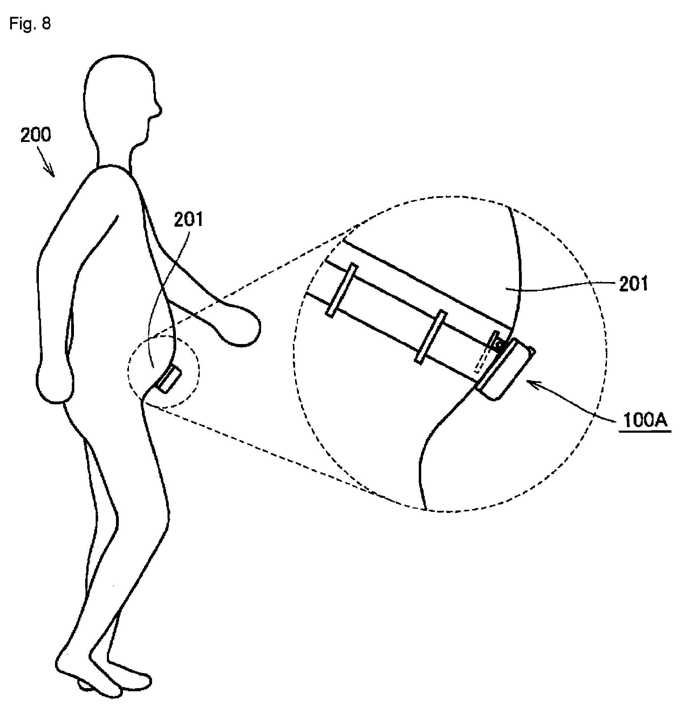

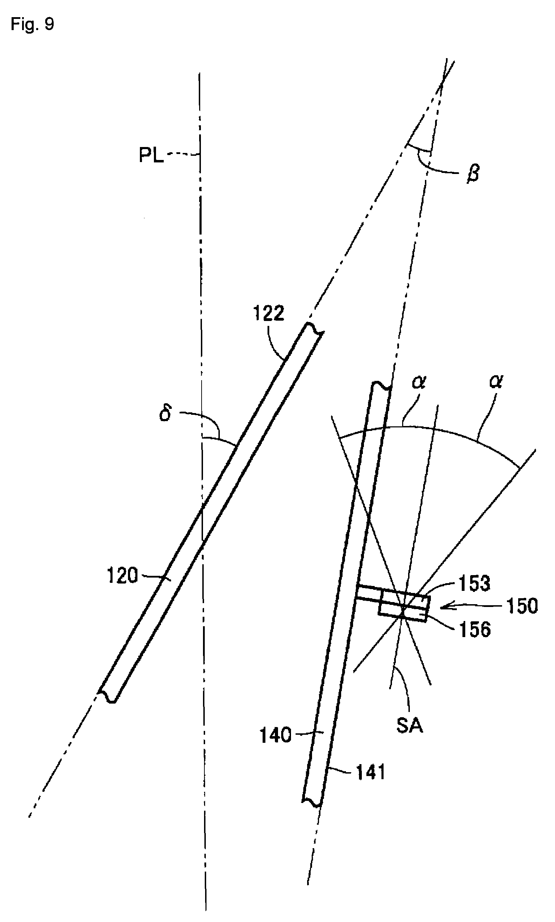

Fig. 6 is a view showing the attachment state of when a person whose lower part of the abdomen is not sticking out attaches the pedometer according to the present embodiment, and Fig. 7 is a view showing in frame format a tilt state of the sensor unit in the relevant case. Fig. 8 is a view showing the attachment state of when a person whose lower part of the abdomen is sticking out attaches the pedometer according to the present embodiment, and Fig. 9 is a view showing in frame format a tilt state of the sensor unit in the relevant case.

First, a case where the person whose lower part of the abdomen is not sticking out attaches the pedometer according to the present embodiment will be described with reference to Fig. 6 and Fig. 7. The pedometer 100A according to the present embodiment is intended to have the body casing attached to the upper end of the clothes such as pants and skirt using the clip body 130, or to have the body casing attached to the upper end of the belt worn at the waist, where a case where the body casing is attached to the upper end of the belt using the clip body 130 is shown in Fig. 6. In this case, the body casing of the pedometer 100A is arranged so that the up and down direction thereof coincides with the substantially perpendicular direction since the lower part of the abdomen 201 of the user 200 is not sticking out.

In the above case, the direction the detecting axis of the sensor unit 150 is arranged is as shown in Fig. 7. That is, with reference to Fig. 7, the attachment surface 122 of the body casing is arranged parallel to a perpendicular line PL, and the detecting axis SA of the sensor unit 150 having the main surface of the beam part 153 arranged so as to perpendicularly intersect the mounting surface 141 of the printed circuit board 140 arranged in an inclined manner at a predetermined inclination angle β with respect to the attachment surface 122 intersects the perpendicular line PL at the inclination angle β. The inclination angle β corresponds to a first inclination angle in the first aspect of the present invention described above.

In the pedometer 100A according to the present embodiment, the detecting axis SA of the sensor unit 150 is arranged in an inclined manner so as to become closer to the attachment surface 122 towards the upper part of the body casing, as shown in the figure, and the inclination angle β is within a range of a detectable angle α of the sensor unit 150, and thus the perpendicular direction exists in the detectable range of the sensor unit 150 even when the user 200 whose lower part of the abdomen 201 is not sticking out attaches the pedometer 100A as shown in Fig. 6. Therefore, the body motion of the user 200 is reliably detected by the sensor unit 150.

A case where the person whose lower part of the abdomen is sticking out attaches the pedometer according to the present embodiment will be described with reference to Fig. 8 and Fig. 9. As shown in Fig. 8, when the person whose lower part of the abdomen 201 is sticking out attaches the pedometer 100A according to the present embodiment to the upper end of the belt worn at the waist, the body casing of the pedometer 100A is arranged with the upper part inclined towards the front side of the user 200 and the lower part inclined towards the lower part of the abdomen 201 side of the user 200. Thus, the up and down direction of the body casing does not coincide with the perpendicular direction, and will be in a greatly tilted state.

In the above case, the direction the detecting axis of the sensor unit 150 is arranged is as shown in Fig. 9. That is, with reference to Fig. 9, the attachment surface 122 of the body casing is arranged in an inclined manner at a predetermined angle δ with respect to the perpendicular line PL, and the detecting axis SA of the sensor unit 150 having the main surface of the beam part 153 arranged so as to perpendicularly intersect the mounting surface 141 of the printed circuit board 140 arranged in an inclined manner at a predetermined inclination angle β with respect to the attachment surface 122 intersects the perpendicular line PL at an angle of (β-δ).

If the predetermined angle δ satisfies the condition (β-α)≤δ≤(β+α), the perpendicular direction exists within a detectable range of the sensor unit 150. Thus, the body motion of the user 200 can be reliably detected by the sensor unit 150 even when the user 200 whose lower part of the abdomen 201 is sticking out attaches the pedometer 100A, as shown in Fig. 8, by appropriately adjusting the inclination angle β formed by the attachment surface 122 of the body casing and the detecting axis of the sensor unit 150. Therefore, the body motion can be detected in greater number of occasions.

As described above, lowering in measurement precision due to variation of the attachment state attributed to the body shape of the user can be prevented according to the pedometer 100A of the present embodiment, and the body motion can be detected in a greater number of occasions including, of course, use by the person whose lower part of the abdomen is not sticking out but also use by the person whose lower part of the abdomen is sticking out.

Assuming the use of a practical acceleration sensor which detectable angle α is 30° for the sensor unit 150 in actually manufacturing the pedometer 100A of the above configuration, the inclination angle β of the mounting surface 141 of the printed circuit board 140 with respect to the attachment surface 122 of the body casing may be 20° by way of example. In such configuration, the body motion can be detected without trouble if the angle δ is within a range of - 10° to 50° in the attachment state.

### (Second embodiment)

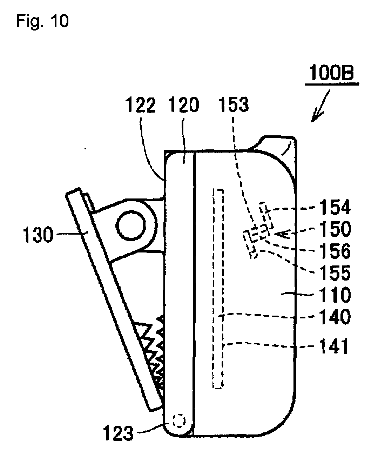

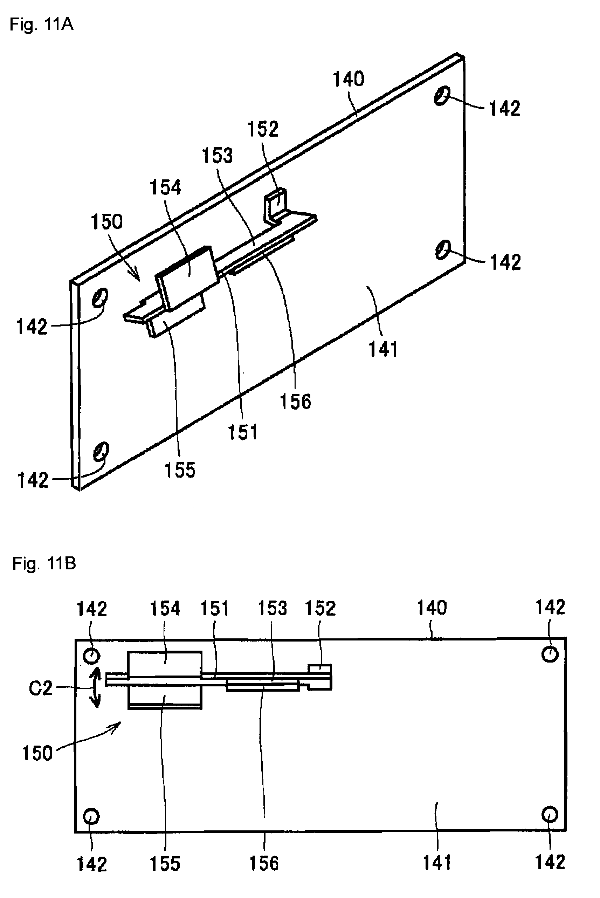

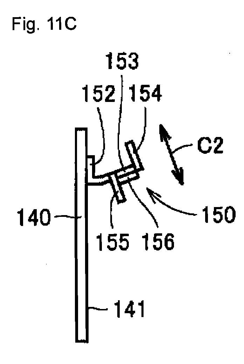

Fig. 10 is a view showing an inner structure of a pedometer according to a second embodiment of the present invention, and is a frame format side view of when the pedometer is in a closed state. Fig. 11 is a view showing an assembly structure to the printed circuit board of the sensor unit of the pedometer according to the present embodiment. Fig. 11A is a schematic perspective view of the printed circuit board after assembly, and Fig. 11B and Fig. 11C are front view and side view, respectively, of the printed circuit board after assembly. In the figure, same reference numerals are denoted for the same portions as the pedometer 100A according to the first embodiment, and the description thereof will not be repeated herein.

In the pedometer 100B according to the present embodiment, the body casing is divided into the case body 110, the cover body 120, and the clip body 130, and the printed circuit board 140 serving as the wiring substrate is accommodated and fixed inside the casing body 110, as shown in Fig. 10, similar to the pedometer 100A according to the first embodiment described above. The printed circuit board 140 is immovably fixed to the body casing, and the sensor unit 150 is attached to the mounting surface 141, which is one main surface of the printed circuit board 140. The sensor unit 150 corresponds to the first body motion detecting unit according to the first aspect of the present invention. In the pedometer 100B according to the present embodiment, the mounting surface 141 of the printed circuit board 140 is arranged parallel to the attachment surface 122 of the body casing, different from the pedometer 100A of the first embodiment.

As shown in Fig. 11A to Fig. 11C, the printed circuit board 140 is made of plate shaped member having a substantially rectangular shape in plan view, and has a circuit pattern formed on the main surface. The sensor unit 150 includes a plate shaped member 151 having a cantilever structure of substantially L-shape in plan view, and a piezoelectric element 156 having a plate shape of a substantially rectangular shape in plan view attached to the plate shaped member 151.

In the pedometer 100B according to the present embodiment, the main surface of the beam part 153 of the plate shaped member 151 is arranged so as to intersect the mounting surface 141 of the printed circuit board 140 at a predetermined inclination angle without being orthogonal, different from the pedometer 100A in the first embodiment. Therefore, the main surface of the beam part 153 is arranged in an inclined manner at a predetermined inclination angle with respect to the attachment surface 122 of the body casing (see Fig. 10).

When the user attaches the case body 110 to the body, the bend in a direction of an arrow C2 in Fig. 11B and Fig. 11C produces at the beam part 153 of the plate shaped member 151 with the body motion. The strain occurs in the piezoelectric element 156 with the bend of the beam part 153, and the electric signal corresponding to such strain is output from the piezoelectric element 156.

In the pedometer 100B according to the present embodiment, the weight part 155 arranged upstanding from the end on the printed circuit board 140 side of the beam part 153 is configured to become farther away from the printed circuit board 140 from the base towards the distal end. The weight part 154 arranged upstanding from the end on the opposite side of the printed circuit board 140 side of the beam part 153 that forms a pair with the weight part 155 is configured to become closer to the printed circuit board 140 from the base towards the distal end. According to such configuration, the weight part 155 will not contact the printed circuit board 140 even if bend produces in the beam part 153, and thus the body motion can be accurately detected, and the pedometer 100B can be miniaturized (thinned).

As described above, the bend direction of the beam part 153 of the plate shaped member 151 configuring the sensor unit 150 is made non-parallel with respect to the attachment surface 122 of the body casing in the pedometer 100B according to the present embodiment. According to such configuration, lowering in measurement precision due to variation in the attachment state attributed to the body shape of the user can be prevented, and the body motion can be detected in greater number of occasions. The mechanism thereof will be described in detail below.

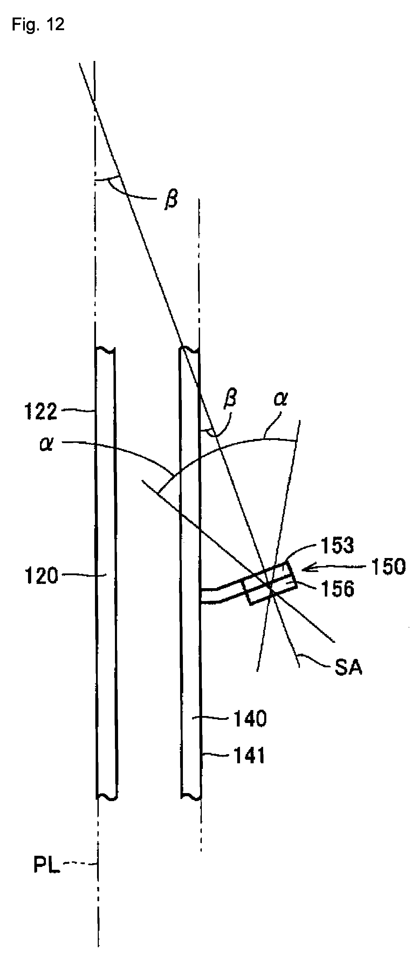

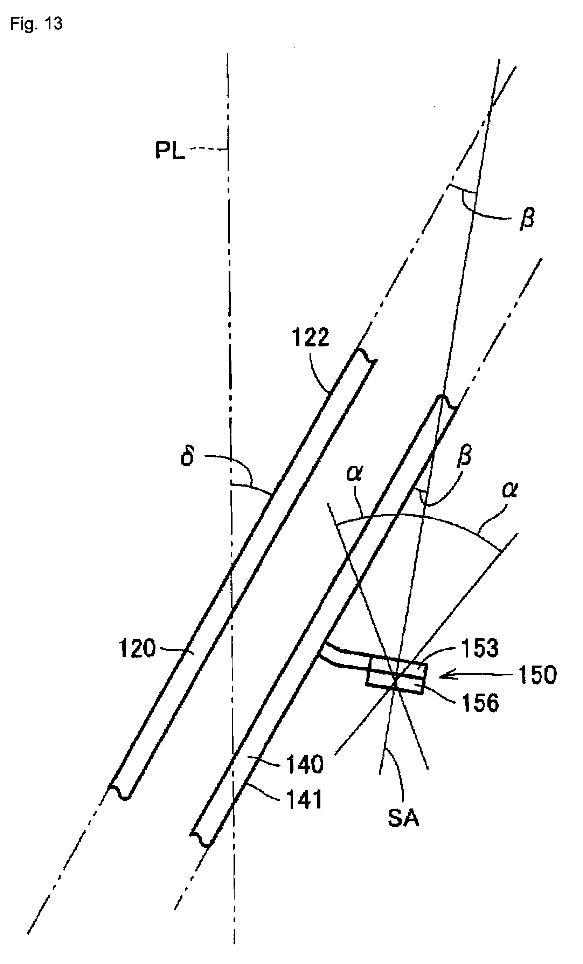

Fig. 12 is a view showing in frame format a tilt state of the sensor unit when a person whose lower part of the abdomen is not sticking out attaches the pedometer according to the present embodiment. Fig. 13 is a view showing in frame format a tilt state of the sensor unit when a person whose lower part of the abdomen is sticking out attaches the pedometer according to the present embodiment.

The attachment state of when the person whose lower part of the abdomen is not sticking out attaches the pedometer 100B according to the present embodiment is the same as Fig. 6 in the first embodiment, and the direction the detecting axis of the sensor unit 150 is arranged in the relevant case is as shown in Fig. 12. That is, with reference to Fig. 12, the attachment surface 122 of the body casing is arranged parallel to a perpendicular line PL, and the mounting surface 141 of the printed circuit board 140 arranged parallel to the attachment surface 122 is also arranged parallel to the perpendicular line PL. Since the main surface of the beam part 153 is arranged in an inclined manner at a predetermined inclination angle β with respect to the mounting surface 141 of the printed circuit board 140, the detecting axis SA of the sensor unit 150 intersects the perpendicular line PL at the inclination angle β. The inclination angle β corresponds to the first inclination angle in the first aspect of the present invention described above.

In the pedometer 100B according to the present embodiment, the detecting axis SA of the sensor unit 150 is arranged in an inclined manner so as to become closer to the attachment surface 122 towards the upper part of the body casing, as shown in the figure, and the inclination angle β is within a range of a detectable angle α of the sensor unit 150, and thus the perpendicular direction exists in the detectable range of the sensor unit 150 even when the user whose lower part of the abdomen is not sticking out attaches the pedometer 100B. Therefore, the body motion of the user is reliably detected by the sensor unit 150.

The attachment state of when the person whose lower part of the abdomen is sticking out attaches the pedometer 100B according to the present embodiment is the same as Fig. 8 in the first embodiment, and the direction the detecting axis of the sensor unit 150 is arranged in the relevant case is as shown in Fig. 13. That is, with reference to Fig. 13, the attachment surface 122 of the body casing is arranged in an inclined manner at a predetermined angle δ with respect to the perpendicular line PL, and the mounting surface 141 of the printed circuit board 140 arranged parallel to the attachment surface 122 is also arranged in an inclined manner at a predetermined angle δ with respect to the perpendicular line PL. Since the main surface of the beam part 153 is arranged in an inclined manner at a predetermined inclination angle β with respect to the mounting surface 141 of the printed circuit board 140, the detecting axis SA of the sensor unit 150 intersects the perpendicular line PL at an angle of (β-δ).

If the predetermined angle δ satisfies the condition (β-α) ≤δ≤(β+α), the perpendicular direction exists within a detectable range of the sensor unit 150. Therefore, the body motion of the user can be reliably detected by the sensor unit 150 even when the user whose lower part of the abdomen is sticking out attaches the pedometer 100B. Thus, the body motion can be detected in great number of occasions by appropriately adjusting the inclination angle β formed by the attachment surface 122 of the body casing and the detecting axis of the sensor unit 150.

As described above, lowering in measurement precision due to variation of the attachment state attributed to the body shape of the user can be prevented according to the pedometer 100B of the present embodiment, and the body motion can be detected in a greater number of occasions including, of course, use by the person whose lower part of the abdomen is not sticking out but also use by the person whose lower part of the abdomen is sticking out.

Assuming the use of a practical acceleration sensor which detectable angle α is 30° for the sensor unit 150 in actually manufacturing the pedometer 100B of the above configuration, the inclination angle β of the detecting axis SA of the sensor unit 150 with respect to the attachment surface 122 of the body casing may be 20° by way of example. Here, the distance between the beam part 153 and the printed circuit board 140 is greater than or equal to 0.8 mm, and preferably about 1.0 mm. In such configuration, the body motion can be detected without trouble if the angle δ is within a range of -10° to 50° in the attachment state.

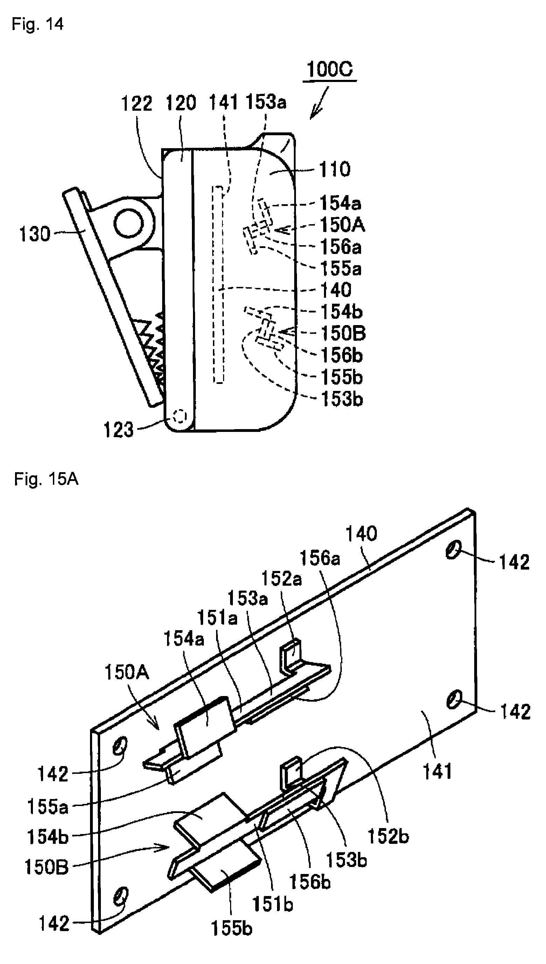

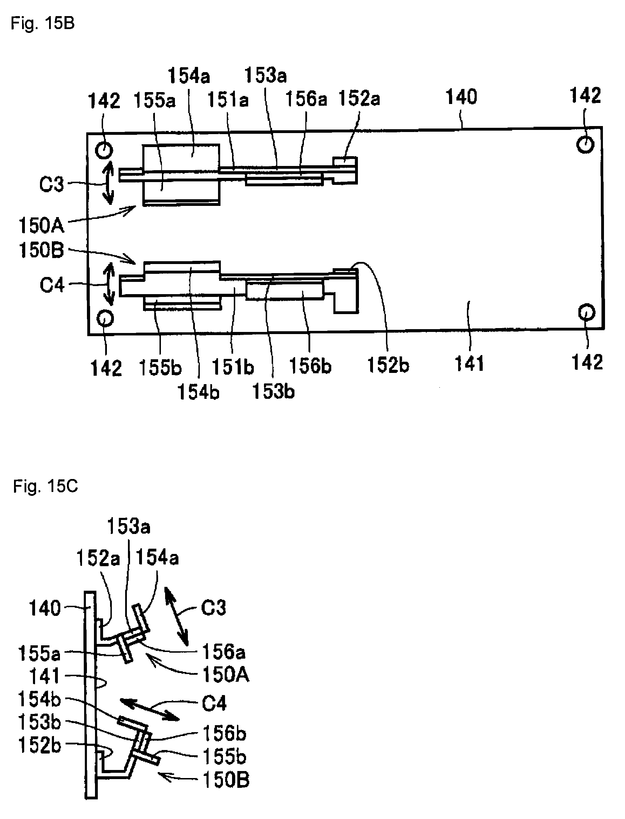

Fig. 14 is a view showing an inner structure of a pedometer according to a third embodiment, and is a frame format side view of when the pedometer is in a closed state. Fig. 15 is a view showing an assembly structure to the printed circuit board of the sensor unit of the pedometer according to the present embodiment. Fig. 15A is a schematic perspective view of the printed circuit board after assembly, and Fig. 15B and Fig. 15C are front view and side view, respectively, of the printed circuit board after assembly. In the figure, same reference numerals are denoted for the same portions as the pedometer 100B according to the second embodiment, and the description thereof will not be repeated herein.

In the pedometer 100C according to the present embodiment, the body casing is divided into the case body 110, the cover body 120, and the clip body 130, and the printed circuit board 140 serving as the wiring substrate is accommodated and fixed inside the casing body 110, as shown in Fig. 14, similar to the pedometer 100B according to the second embodiment described above. The printed circuit board 140 is immovably fixed to the body casing, and two sensor units, a first sensor unit 150A and a second sensor unit 150B, are attached to the mounting surface 141, which is one main surface of the printed circuit board 140. The first sensor unit 150A and a second sensor unit 150B respectively corresponds to the first body motion detecting unit and the second body motion detecting unit according to the first aspect of the present invention. In the pedometer 100C according to the present embodiment, the mounting surface 141 of the printed circuit board 140 is arranged parallel to the attachment surface 122 of the body casing, similar to the pedometer 100B of the second embodiment.

As shown in Fig. 15A to Fig. 15C, the printed circuit board 140 is made of plate shaped member having a substantially rectangular shape in plan view, and has a circuit pattern formed on the main surface. The first sensor unit 150A and a second sensor unit 150B respectively includes a plate shaped member 151 a and 151b having a cantilever structure of substantially L-shape in plan view, and a piezoelectric element 156a and 156b having a plate shape of a substantially rectangular shape in plan view attached to the plate shaped member 151a and 151b.

In the pedometer 100C according to the present embodiment, the main surface of the beam part 153a of the plate shaped member 151 a of the first sensor unit 150A is arranged so as to intersect the mounting surface 141 of the printed circuit board 140 at a predetermined first inclination angle without being orthogonal. Furthermore, the main surface of the beam part 153b of the plate shaped member 151 b of the second sensor unit 150B is arranged so as to intersect the mounting surface 141 of the printed circuit board 140 at a predetermined second inclination angle larger than the first inclination angle in the first sensor unit 150A without being orthogonal. Therefore, the main surfaces of the beam parts 153a and 153b of the respective sensor units 150A and 150B are arranged in an inclined manner at a predetermined first inclination angle and second inclination angle with respect to the attachment surface 122 of the body casing (see Fig. 14).

When the user attaches the case body 110 to the body, the bend in a direction of arrow C3 and C4 in Fig. 15B and Fig. 15C produces at the beam parts 153a, 153b of the plate shaped members 151 a, 151 b of the respective first sensor unit 150A and the second sensor unit 150B with the body motion. The strain occurs in the piezoelectric elements 156a, 156b with the bend of the respective beam parts 153a, 153b, and the electric signal corresponding to such strain is output from the respective piezoelectric elements 156a, 156b.

In the pedometer 100C according to the present embodiment, the weight parts 155a, 155b arranged upstanding from the end on the printed circuit board 140 side of the beam parts 153a, 153b of the first sensor unit 150A and the second sensor unit 150B are respectively configured to become farther away from the printed circuit board 140 from the base towards the distal end. The weight part 154a, 154b arranged upstanding from the end on the opposite side of the printed circuit board 140 side of the beam part 153a, 153b that forms a pair with the weight part 155a, 155b is configured to become closer to the printed circuit board 140 from the base towards the distal end. According to such configuration, the weight parts 155a, 155b will not contact the printed circuit board 140 even if bend produces in the beam parts 153a, 153b, and thus the body motion can be accurately detected, and the pedometer 100C can be miniaturized (thinned).

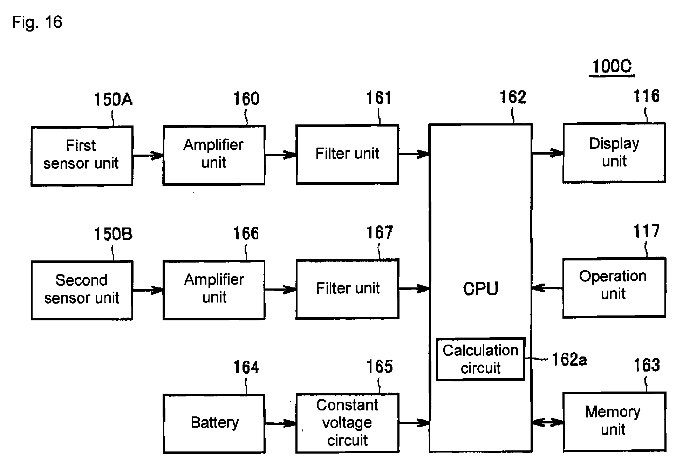

Fig. 16 is a block diagram showing function blocks of the pedometer according to the present embodiment. The function blocks of the pedometer according to the present embodiment will be described below with reference to the drawings.

As shown in Fig. 16, the pedometer 100C according to the present embodiment includes two sensor units 150A and 150B for the body motion detecting unit. Accordingly, in the pedometer 100C according to the present embodiment, amplifier units 160, 166 and filter units 161, 167 are arranged in correspondence to the first sensor unit 150A and the second sensor unit 150B. The CPU 162 also has a function serving as a selection unit in the first aspect of the present invention to select which output signal output from the sensor unit, first sensor unit 150A or second sensor unit 150B, to select for the target of body motion detection, and performs various calculations in the calculation circuit 162a using the selected output signal, and counts the number of steps. Configuration other than the above is similar to the pedometer 100A of the first embodiment.

As described above, the bend direction of the beam parts 153a, 153b of the plate shaped members 151 a, 151b configuring the first sensor unit 150A and the second sensor unit 150B are made non-parallel with respect to the attachment surface 122 of the body casing in the pedometer 100C of the present embodiment. According to such configuration, lowering in measurement precision due to variation in the attachment state attributed to the body shape of the user can be prevented, and the body motion can be detected in greater number of occasions. The mechanism thereof will be described in detail below.

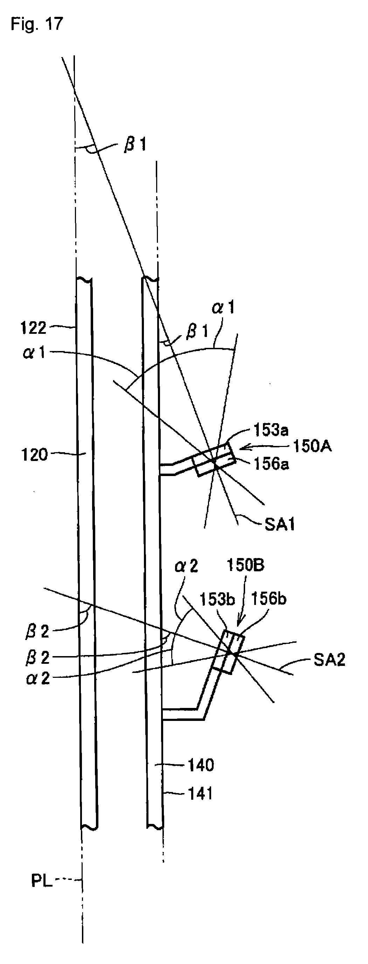

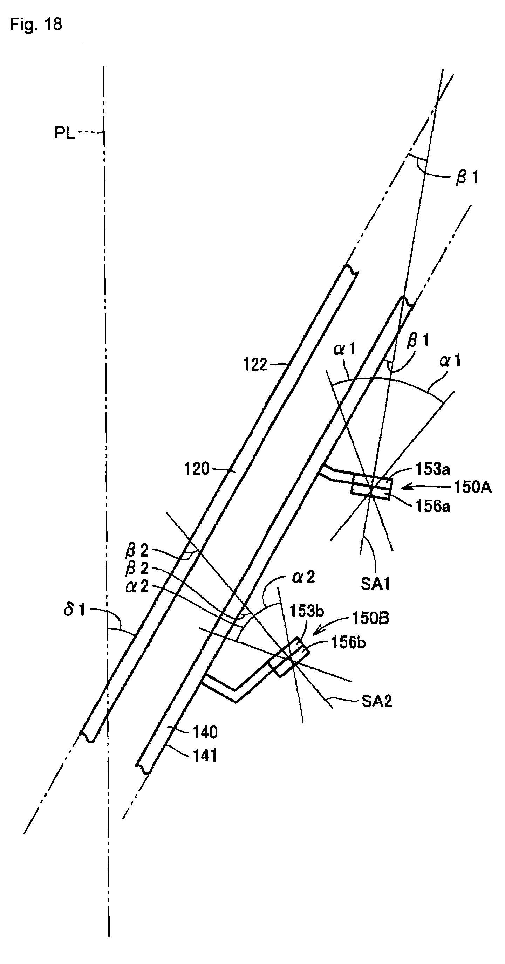

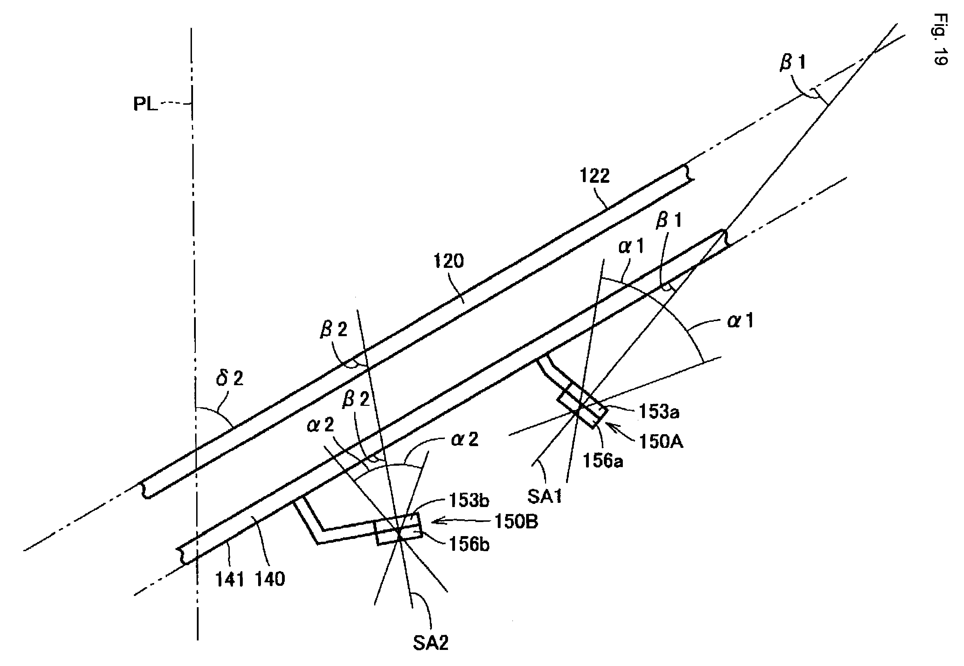

Fig. 17 is a view showing in frame format a tilt state of the sensor unit when a person whose lower part of the abdomen is not sticking out attaches the pedometer according to the present embodiment. Fig. 18 is a view showing in frame format a tilt state of the first sensor unit and the second sensor unit when a person whose lower part of the abdomen is sticking out attaches the pedometer according to the present embodiment. Fig. 19 is a view showing in frame format a tilt state of the first sensor unit and the second sensor unit when a person whose lower part of the abdomen is sticking out further than in the case of Fig. 18 attaches the pedometer according to the present embodiment.

The direction the detecting axes of the first sensor unit 150A and the second sensor unit 150B are arranged when the person whose lower part of the abdomen is not sticking out attaches the pedometer 100C according to the present embodiment is as shown in Fig. 17. That is, with reference to Fig. 17, the attachment surface 122 of the body casing is arranged parallel to the perpendicular line PL, and the mounting surface 141 of the printed circuit board 140 arranged parallel to the attachment surface 122 is also arranged parallel to the perpendicular line PL. Since the main surface of the beam part 153a of the plate shaped member 151 a of the first sensor unit 150A is arranged in an inclined manner at a predetermined first inclination angle β1 with respect to the mounting surface 141 of the printed circuit board 140, the detecting axis SA1 of the first sensor unit 150A intersects the perpendicular line PL at the inclination angle β1. The first inclination angle β1 corresponds to the first inclination angle in the first aspect of the present invention described above.

In the pedometer 100C according to the present embodiment, the detecting axis SA1 of the first sensor unit 150A is arranged in an inclined manner so as to become closer to the attachment surface 122 towards the upper part of the body casing, as shown in the figure, and the first inclination angle β1 is within a range of a detectable angle α1 of the first sensor unit 150A, and thus the perpendicular direction exists in the detectable range of the first sensor unit 150A even when the user whose lower part of the abdomen is not sticking out attaches the pedometer 100C. Therefore, the body motion of the user is reliably detected by the first sensor unit 150A.

The direction the detecting axes of the first sensor unit 150A and the second sensor unit 150B are arranged when the person whose lower part of the abdomen is sticking out attaches the pedometer 100C according to the present embodiment is as shown in Fig. 18. That is, with reference to Fig. 18, the attachment surface 122 of the body casing is arranged in an inclined manner at a predetermined angle δ1 with respect to the perpendicular line PL, and the mounting surface 141 of the printed circuit board 140 arranged parallel to the attachment surface 122 is also arranged in an inclined manner at a predetermined angle δ1 with respect to the perpendicular line PL. Since the main surface of the beam part 153a of the plate shaped member 151 a of the first sensor unit 150A is arranged in an inclined manner at the predetermined first inclination angle β1 with respect to the mounting surface 141 of the printed circuit board 140, the detecting axis SA1 of the first sensor unit 150A intersects the perpendicular line PL at an angle of (β1-δ1).

If the predetermined angle δ1 satisfies the condition (β1-α1)≤δ1≤(β1+α1), the perpendicular direction exists within a detectable range of the first sensor unit 150A. Therefore, the body motion of the user can be reliably detected by the first sensor unit 150A even when the user whose lower part of the abdomen is sticking out attaches the pedometer 100C. Thus, the body motion can be detected in great number of occasions by appropriately adjusting the first inclination angle β1 formed by the attachment surface 122 of the body casing and the detecting axis SA1 of the first sensor unit 150A.

The direction the respective detecting axis of the first sensor unit 150A and the sensor unit 150B is arranged when the person whose lower part of the abdomen is sticking out further than in the above case attaches the pedometer 100C of the present embodiment is as shown in Fig. 19. That is, with reference to Fig. 19, the attachment surface 122 of the body casing is arranged at an inclined manner at a predetermined angle δ2(>δ1) with respect to the perpendicular line PL, and the mounting surface 141 of the printed circuit board 140 arranged parallel to the attachment surface 122 is also arranged in an inclined manner at a predetermined angle δ2 with respect to the perpendicular line PL. Since the main surface of the beam part 153b of the plate shaped member 151b of the second sensor unit 150B is arranged in an inclined manner at a predetermined second inclination angle β2 with respect to the mounting surface 141 of the printed circuit board 140, the detecting axis SA2 of the second sensor unit 150B intersects the perpendicular line PL at an angle of (β2-δ2). The second inclination angle β2 corresponds to the second inclination angle in the first aspect of the present invention.

If the predetermined angle δ2 satisfies the condition (β2-α2)≤δ2≤(β2+α2), the perpendicular direction exists within a detectable range of the second sensor unit 150B. Therefore, the body motion of the user 200 can be reliably detected by the second sensor unit 150B even when the user 200 whose lower part of the abdomen 201 is sticking out further attaches the pedometer 100C. Thus, the body motion can be detected in great number of occasions by appropriately adjusting the second inclination angle β2 formed by the attachment surface 122 of the body casing and the detecting axis SA2 of the second sensor unit 150B.

As described above, lowering in measurement precision due to variation in the attachment state attributed to the body shape of the user can be further prevented according to the pedometer 100C of the present embodiment compared to the pedometers 100A and 100B of the first and the second embodiments where one sensor unit is provided, and the body motion can be detected in greater number of occasions including, of course, use by the person whose lower part of the abdomen is not sticking out but also use by the person whose lower part of the abdomen is sticking out.

The detectable range of the first sensor unit 150A and the detectable range of the second sensor unit 150B are formed to partially overlap to give continuity to the detectable range in the pedometer 100C according to the present embodiment. Therefore, when the inclination with respect to the perpendicular line of the body casing becomes a predetermined angle range, the body motion is detected by both the first sensor unit 150A and the second sensor unit 150B. In the pedometer 100C according to the present embodiment, however, the CPU 162 functions as the selection unit for alternatively selecting the signal, and thus redundant counting of the number of steps is prevented.

Assuming the use of a practical acceleration sensor which detectable angle α is 30° for the sensor units 150A and 150B in actually manufacturing the pedometer 100C of the above configuration, the inclination angle β1 of the detecting axis SA1 of the first sensor unit 150A with respect to the attachment surface 122 of the body casing may be 20°, and the inclination angle β2 of the detecting axis SA2 of the second sensor unit 150B with respect to the attachment surface 122 of the body casing may be 70° by way of example. Here, the distance between the beam parts 153a, 153b and the printed circuit board 140 is greater than or equal to 0.8 mm, and preferably about 1.0 mm. In such configuration, the body motion can be detected without trouble if the angle δ is within a range of -10° to 100° in the attachment state.

### (Fourth embodiment)

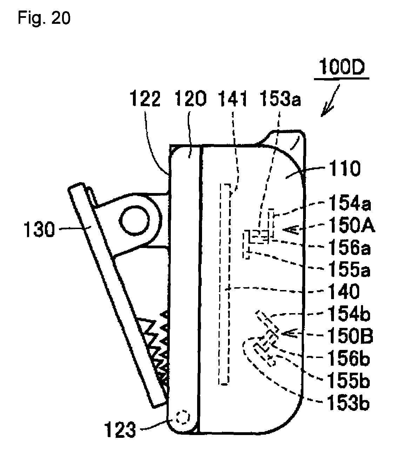

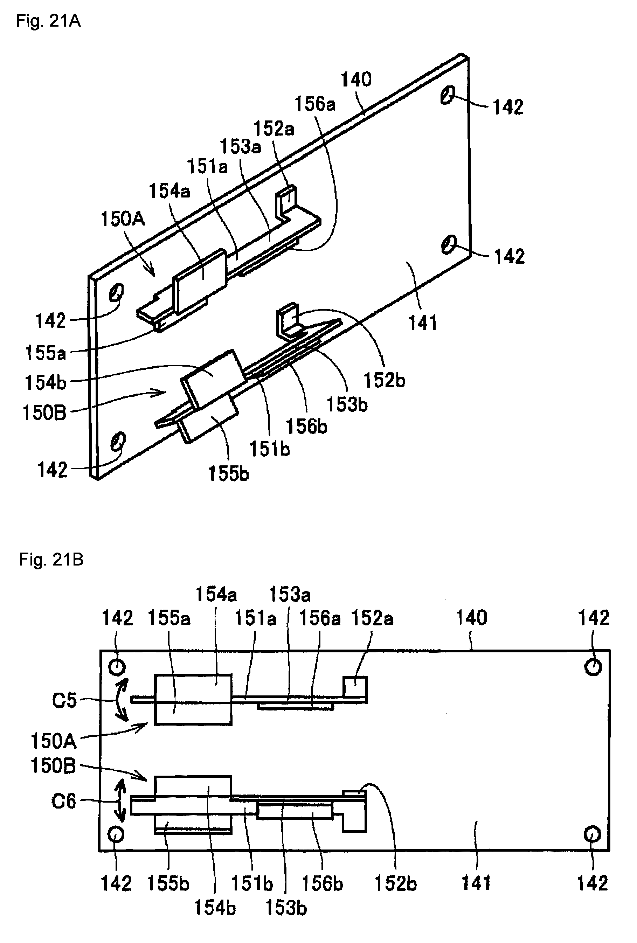

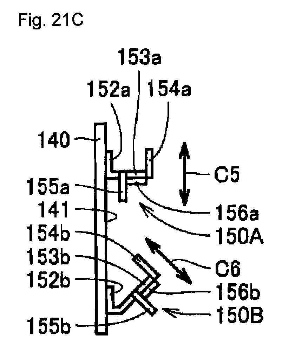

Fig. 20 is a view showing an inner structure of a pedometer according to a fourth embodiment, and is a frame format side view of when the pedometer is in a closed state. Fig. 21 is a view showing an assembly structure to the printed circuit board of the sensor unit of the pedometer according to the present embodiment. Fig. 21A is a schematic perspective view of the printed circuit board after assembly, and Fig. 21B and Fig. 21C are front view and side view, respectively, of the printed circuit board after assembly. In the figure, same reference numerals are denoted for the same portions as the pedometer 100C according to the third embodiment, and the description thereof will not be repeated herein.

In the pedometer 100D according to the present embodiment, the body casing is divided into the case body 110, the cover body 120, and the clip body 130, and the printed circuit board 140 serving as the wiring substrate is accommodated and fixed inside the casing body 110, as shown in Fig. 20, similar to the pedometer 100C according to the third embodiment described above. The printed circuit board 140 is immovably fixed to the body casing, and two sensor units, the first sensor unit 150A and the second sensor unit 150B, are attached to the mounting surface 141, which is one main surface of the printed circuit board 140. The first sensor unit 150A and the second sensor unit 150B respectively corresponds to the first body motion detecting unit and the second body motion detecting unit according to a second aspect of the present invention. In the pedometer 100D according to the present embodiment, the mounting surface 141 of the printed circuit board 140 is arranged parallel to the attachment surface 122 of the body casing, similar to the pedometer 100C of the third embodiment.

As shown in Fig. 21A to Fig. 21C, the printed circuit board 140 is made of plate shaped member having a substantially rectangular shape in plan view, and has a circuit pattern formed on the main surface. The first sensor unit 150A and a second sensor unit 150B respectively includes the plate shaped member 151 a, 151 b having a cantilever structure of substantially L-shape in plan view, and the piezoelectric element 156a, 156b having a plate shape of a substantially rectangular shape in plan view attached to the plate shaped member 151a, 151b.

In the pedometer 100D according to the present embodiment, the main surface of the beam part 153a of the plate shaped member 151a of the first sensor unit 150A is arranged so as to be orthogonal to the mounting surface 141 of the printed circuit board 140. Furthermore, the main surface of the beam part 153b of the plate shaped member 151b of the second sensor unit 150B is arranged so as to intersect the mounting surface 141 of the printed circuit board 140 at a predetermined inclination angle without being orthogonal. Therefore, the main surface of the beam part 153a of the sensor unit 150A is arranged orthogonal to the attachment surface 122 of the body casing, and the main surface of the beam part 153b of the sensor unit 150B is arranged in an inclined manner at a predetermined inclination angle with respect to the attachment surface 122 of the body casing (see Fig. 20).

When the user attaches the case body 110 to the body, the bend in a direction of arrow C5 and C6 in Fig. 21B and Fig. 21C produces at the beam parts 153a, 153b of the plate shaped members 151 a, 151b of the respective first sensor unit 150A and the second sensor unit 150B with the body motion. The strain occurs in the piezoelectric elements 156a, 156b with the bend of the respective beam parts 153a, 153b, and the electric signal corresponding to the strain is output from the respective piezoelectric elements 156a, 156b.

In the pedometer 100D according to the present embodiment, the weight part 155b arranged upstanding from the end on the printed circuit board 140 side of the beam part 153b of the second sensor unit 150B is configured to become farther away from the printed circuit board 140 from the base towards the distal end. The weight part 154b arranged upstanding from the end on the opposite side of the printed circuit board 140 side of the beam part 153b that forms a pair with the weight part 155b is configured to become closer to the printed circuit board 140 from the base towards the distal end. According to such configuration, the weight part 155b will not contact the printed circuit board 140 even if bend produces in the beam part 153, and thus the body motion can be accurately detected, and the pedometer 100D can be miniaturized (thinned).

As described above, the bend direction of the beam part 153a of the plate shaped member 151a configuring the first sensor unit 150A is made parallel with respect to the attachment surface 122 of the body casing, and the bend direction of the beam part 153b of the plate shaped member 151b configuring the second sensor unit 150B is made non-parallel with respect to the attachment surface 122 of the body casing in the pedometer 100D of the present embodiment. According to such configuration, lowering in measurement precision due to variation in the attachment state attributed to the body shape of the user can be prevented, and the body motion can be detected in greater number of occasions. The mechanism thereof will be described in detail below.

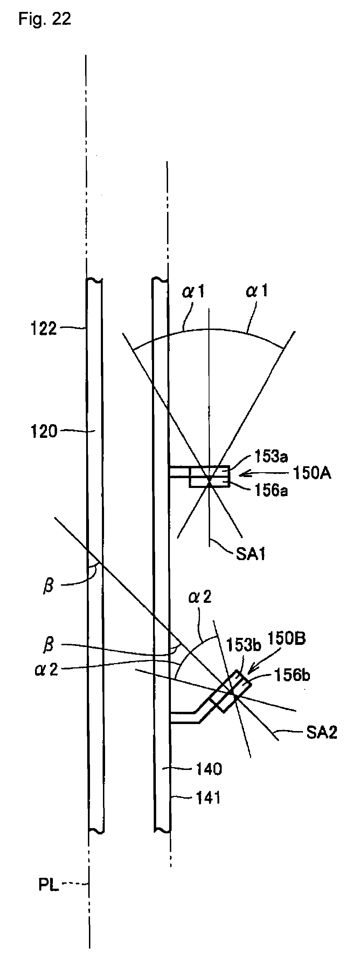

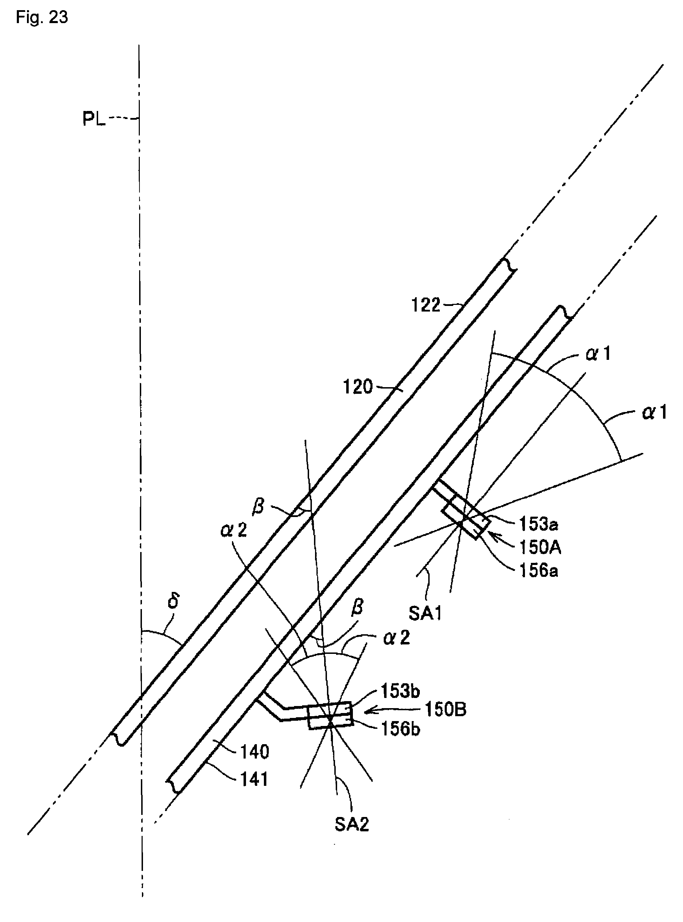

Fig. 22 is a view showing in frame format a tilt state of the sensor unit when a person whose lower part of the abdomen is not sticking out attaches the pedometer according to the present embodiment. Fig. 23 is a view showing in frame format a tilt state of the first sensor unit and the second sensor unit when a person whose lower part of the abdomen is sticking out attaches the pedometer according to the present embodiment.

The direction the detecting axes of the first sensor unit 150A and the second sensor unit 150B are arranged when the person whose lower part of the abdomen is not sticking out attaches the pedometer 100D according to the present embodiment is as shown in Fig. 22. That is, with reference to Fig. 22, the attachment surface 122 of the body casing is arranged parallel to the perpendicular line PL, and the mounting surface 141 of the printed circuit board 140 arranged parallel to the attachment surface 122 is also arranged parallel to the perpendicular line PL. In this state, the detecting axis SA1 of the first sensor unit 150A is orthogonal to the perpendicular line PL, and thus the body motion can be reliably detected in the detecting axis direction at which the maximum sensitivity of the first sensor unit 150A can be obtained.

The direction the detecting axes of the first sensor unit 150A and the second sensor unit 150B are arranged when the person whose lower part of the abdomen is sticking out attaches the pedometer 100D according to the present embodiment is as shown in Fig. 23. That is, with reference to Fig. 23, the attachment surface 122 of the body casing is arranged in an inclined manner at a predetermined angle δ with respect to the perpendicular line PL, and the mounting surface 141 of the printed circuit board 140 arranged parallel to the attachment surface 122 is also arranged in an inclined manner at a predetermined angle δ with respect to the perpendicular line PL. Since the main surface of the beam part 153b of the plate shaped member 151 b of the second sensor unit 150B is arranged in an inclined manner at a predetermined inclination angle β with respect to the mounting surface 141 of the printed circuit board 140, the detecting axis SA2 of the second sensor unit 150B intersects the perpendicular line PL at an angle of (β1-δ1). The inclination angle β corresponds to the inclination angle in the second aspect of the present invention.

If the predetermined angle δ satisfies the condition (β- α2)≤δ≤(β+α2), the perpendicular direction exists within a detectable range of the second sensor unit 150B. Therefore, the body motion of the user can be reliably detected by the second sensor unit 150B even when the user whose lower part of the abdomen is sticking out attaches the pedometer 100D. Thus, the body motion can be detected in great number of occasions by appropriately adjusting the inclination angle β formed by the attachment surface 122 of the body casing and the detecting axis SA2 of the second sensor unit 150B.

As described above, lowering in measurement precision due to variation in the attachment state attributed to the body shape of the user can be further prevented according to the pedometer 100D of the present embodiment compared to the pedometers 100A and 100B of the first and the second embodiments where one sensor unit is provided, and the body motion can be detected in greater number of occasions including, of course, use by the person whose lower part of the abdomen is not sticking out but also use by the person whose lower part of the abdomen is sticking out.

In the pedometer 100D according to the present embodiment as well, the detectable range of the first sensor unit 150A and the detectable range of the second sensor unit 150B are formed to partially overlap to give continuity to the detectable range, similar to the pedometer 100C of the third embodiment. Therefore, when the inclination with respect to the perpendicular line of the body casing becomes a predetermined angle range, the body motion is detected by both the first sensor unit 150A and the second sensor unit 150B. In the pedometer 100D according to the present embodiment, however, the CPU 162 functions as the selection unit for alternatively selecting the signal, and thus redundant counting of the number of steps is prevented, similar to the pedometer 100C according to the third embodiment.

Assuming the use of a practical acceleration sensor which detectable angle α is 30° for the sensor units 150A, 150B in actually manufacturing the pedometer 100D of the above configuration, the inclination angle β of the detecting axis SA2 of the second sensor unit 150B with respect to the attachment surface 122 of the body casing may be 55° by way of example. Here, the distance between the beam parts 153b and the printed circuit board 140 is greater than or equal to 0.8 mm, and preferably about 1.0 mm. In such configuration, the body motion can be detected without trouble if the angle δ is within a range of -30° to 85° in the attachment state.

Description has been described in the first to the fourth embodiments illustrating a case of configuring the sensor unit serving as the body motion detecting unit with the plate shaped member having a cantilever structure and the piezoelectric element, but it is not limited to such configuration. A pendulum type sensor unit may be used for the body motion detecting unit.

Each embodiment disclosed herein is illustrative in all aspects and should not be construed as being restrictive. The technical scope of the invention is defined by the appended claims, and all changes that fall within meets and bounds of the claims, or equivalence of such meets and bounds are therefore intended to be embraced by the claims.

## Claims

1. A body motion detector comprising:
a body casing (110) having an attachment surface (122) configured to be attached to a waist of a user being an object of body motion detection, the attachment surface (122) being configured to be attached to the waist of the user in a first attachment state in which the attachment surface (122) is arranged parallel to a perpendicular line (PL) and in a second attachment state in which the attachment surface (122) is arranged in an inclined manner at a predetermined angle δ with respect to the perpendicular line (PL);
a first body motion detecting unit (150; 150A) fixed in the body casing (110) and configured to detect a body motion of the object, the first body motion detecting unit (150; 150A) having a detecting axis (SA; SA1) within a detectable angle range α, the detectable angle range existing by the same extent on both sides with the detecting axis in between, and a sensitivity of the first body motion detecting unit (150; 150A) being a maximum when the body motion occurs along the detecting axis (SA; SA1),
**characterized in that**
the detecting axis (SA) of the first body motion detecting unit (150; 150A) is inclined at a first inclination angle β from the attachment surface (122) of the body casing (110) such that, in the first attachment state, the first inclination angle β is within the detectable angle range α so that the direction of the perpendicular line (PL) exists in the detectable angle range α
and, in the second attachment state which fulfills the condition (β-α)≤δ≤(β+α), the detecting axis (SA; SA1) intersects the perpendicular line at an angle β-δ so that the direction of the perpendicular line (PL) exists in the detectable angle range α,
the first body motion detecting unit (150; 150A) includes a plate shaped member (151; 151a) with a beam part (153; 153a) that bends with the body motion, and a piezoelectric element (156; 156a) attached to a main surface of the beam part (153; 153a) of the plate shaped member (151; 151a), and
the first body motion detecting unit (150; 150A) is attached to a wiring substrate (140) accommodated and fixed inside the body casing (110), the main surface of the beam part (153; 153a) is inclined at the first inclination angle β from a normal of a main surface of the wiring substrate (140), and the main surface of the wiring substrate (140) is parallel to the attachment surface (122) of the body casing (110).

2. The body motion detector according to claim 1, wherein
the beam part (153; 153a) comprises a weight part upstanding from an end of the beam part (153; 153a) on the wiring substrate side of the beam part (153; 153a); and
the weight part extends in a direction of becoming farther away from the wiring substrate (140) towards a distal end.

3. The body motion detector according to claim 1, further comprising a second body motion detecting unit (150B) fixed in the body casing (110) and configured to detect a body motion along a further detecting axis (SA2), wherein
the further detecting axis (SA2) of the second body motion detecting unit (150B) is inclined at a second inclination angle larger than the first inclination angle from the attachment surface (122) of the body casing (110);
the second inclination angle is not within a further detectable angle range of the second body motion detecting unit (150B), the further detectable angle range existing by the same extent on both sides with the further detecting axis in between; and
the detectable angle range of the first body motion detecting unit (150A) and the further detectable angle range of the second body motion detecting unit (150B) at least partially overlap.

4. The body motion detector according to claim 3, wherein the further detecting axis (SA2) of the second body motion detecting unit (150B) is arranged so as to become closer to the attachment surface (122) towards an upper part of the body casing (110).

5. The body motion detector according to claim 3, wherein the first body motion detecting unit (150A) and the second body motion detecting unit (150B) respectively includes a plate shaped member (151a, 151b) with a beam part (153a, 153b) that bends with the body motion, and a piezoelectric element (156a, 156b) attached to a main surface of the beam part (153a, 153b) of the plate shaped member (151a, 151b).

6. The body motion detector according to claim 3, further comprising a selection unit (162) for selecting an output signal from the first body motion detecting unit (150A) or the second body motion detecting unit (150B) to select for the target of body motion detection.

7. A body motion detector comprising:
a body casing (110) comprising an attachment surface (122) configured to be attached to a waist of a user being an object of body motion detection, the attachment surface (122) being configured to be attached to the waist of the user in a first attachment state in which the attachment surface (122) is arranged parallel to a perpendicular line (PL) and in a second attachment state in which the attachment surface (122) is arranged in an inclined manner at a predetermined angle δ with respect to the perpendicular line (PL);
a first body motion detecting unit (150A) and a second body motion detecting unit (150B) that are fixed in the body casing (110) and configured so as to detect a body motion of the object,
the first body motion detecting unit (150A) having a first detecting axis (SA1) within a first detectable angle range α1*,* the first detectable angle α1 range existing by the same extent on both sides with the first detecting axis in between, a sensitivity of the first body motion detecting unit (150A) being a maximum when the body motion occurs along the first detecting axis (SA1),
the second body motion detecting unit (150B) having a second detecting axis (SA2) within a second detectable angle range α2, the second detectable angle range α2 existing by the same extent on both sides with the second detecting axis in between, and a sensitivity of the second body motion detecting unit (150B) being a maximum when the body motion occurs along the second detecting axis (SA2),
**characterized in that**
the first detecting axis (SA1) of the first body motion detecting unit (150A) is parallel to the attachment surface (122) of the body casing (110) and
the second detecting axis (SA2) of the second body motion detecting unit (150B) is inclined at an inclination angle β from the attachment surface (122) of the body casing (110),
the first detectable range α1 of the first body motion detecting unit (150A) and the second detectable range α2 of the second body motion detecting unit (150B) at least partially overlap,
the first detecting axis and the second detecting axis are arranged such that, in the first attachment state, the first detecting axis is parallel to the perpendicular line (PL) so that the direction of the perpendicular line (PL) exists in the first detectable angle range α1 and, in the second attachment state which fulfills the condition (β-α2)≤δ≤(β+α2), the second detecting axis intersects the perpendicular line at an angle β-δ so that the direction of the perpendicular line (PL) exists in the second detectable angle range α2,
each of the first body motion detecting unit (150A) and the second body motion detecting unit (150B) includes a plate shaped member (151a, 151b) with a beam part (153a, 153b) that bends with the body motion, and a piezoelectric element attached to a main surface of the beam part (153a, 153b) of the plate shaped member (151a, 151b), and
the first body motion detecting unit (150A) and the second body motion detecting unit (150B) are attached to a wiring substrate (140) accommodated and fixed inside the body casing (110), a plane parallel to the main surface of the beam part (153b) of the second body motion detecting unit (150B) is inclined at the inclination angle β from a normal of the main surface of the wiring substrate (140), and the main surface of the wiring substrate (140) is parallel to the normal of the attachment surface (122) of the body casing (110).

8. The body motion detector according to claim 7, wherein
the beam part (153b) of the second body motion detecting unit (150B) comprises a weight part upstanding from an end of the beam part (153b) on the wiring substrate side of the beam part (153b); and
the weight part extends in a direction of becoming farther away from the wiring substrate (140) towards a distal end.

9. The body motion detector according to claim 7, further comprising a selection unit (162) for selecting an output signal from the first body motion detecting unit (150A)or the second body motion detecting unit (150B) to select for the target of body motion detection.

## Patentansprüche

1. Körperbewegungsdetektor, umfassend:
ein Körpergehäuse (110) mit einer Befestigungsfläche (122), die eingerichtet ist, an einer Taille eines ein Köperbewegungsdetektionsobjekt bildenden Benutzers befestigt zu werden, wobei die Befestigungsfläche (122) eingerichtet ist, an der Taille des Benutzers in einem ersten Befestigungszustand, bei dem die Befestigungsfläche (122) parallel zu einer senkrechten Linie (PL) angeordnet ist, und in einem zweiten Befestigungszustand, bei dem die Befestigungsfläche (22) auf geneigte Weise in einem vorbestimmten Winkel δ in Bezug auf die senkrechte Linie (PL) angeordnet ist, befestigt zu werden;
eine erste Körperbewegungsdetektionseinheit (150; 150A), die in dem Körpergehäuse (110) fixiert und eingerichtet ist, eine Körperbewegung des Objekts zu detektieren, wobei die erste Körperbewegungsdetektionseinheit (150; 150A) eine Detektionsachse (SA; SA1) innerhalb eines feststellbaren Winkelbereichs α umfasst, wobei der feststellbare Winkelbereich im gleichen Ausmaß an beiden Seiten in Bezug auf die dazwischenliegende Detektionsachse vorliegt und wobei eine Empfindlichkeit der ersten Körperbewegungsdetektionseinheit (150; 150A) maximal ist, wenn die Körperbewegung entlang der Detektionsachse (SA; SA1) stattfindet,
**dadurch gekennzeichnet, dass**
die Detektionsachse (SA) der ersten Körperbewegungsdetektionseinheit (150; 150A) in einem ersten Neigungswinkel β in Bezug auf die Befestigungsfläche (122) des Körpergehäuses (110) derart geneigt ist, dass bei dem ersten Befestigungszustand sich der erste Neigungswinkel β innerhalb des feststellbaren Winkelbereichs α befindet, so dass die Richtung der senkrechten Linie (PL) in dem feststellbaren Winkelbereich α vorliegt,
und bei dem zweiten Befestigungszustand, der die Bedingung (β-α)≤δ≤(β+α) erfüllt, die Detektionsachse (SA; SA1) die senkrechte Linie in einem Winkel β-δ schneidet, so dass die Richtung der senkrechten Linie (PL) in dem feststellbaren Winkelbereich α vorliegt,
wobei die erste Körperbewegungsdetektionseinheit (150; 150A) ein plattenförmiges Element (151; 151a) mit einem sich mit der Körperbewegung biegenden Balkenteil (153; 153), und ein piezoelektrisches Element (156; 156a), das an einer Hauptfläche des Balkenteils (153; 153a) des plattenförmigen Elements (151; 151a) befestigt ist, umfasst, und
wobei die erste Körperbewegungsdetektionseinheit (150; 150A) an einem Schaltungsträger (140), der innerhalb des Körpergehäuses (110) aufgenommen und fixiert ist, befestigt ist, wobei die Hauptfläche des Balkenteils (153; 153a) in dem ersten Neigungswinkel β in Bezug auf eine Normale einer Hauptfläche des Schaltungsträgers (140) geneigt ist und wobei die Hauptfläche des Schaltungsträgers (140) parallel zu der Befestigungsfläche (122) des Körpergehäuses (110) ist.

2. Körperbewegungsdetektor nach Anspruch 1, wobei
das Balkenteil (153; 153a) ein Gewichtsteil umfasst, das von einem Ende des Balkenteils (153; 153a) an der Schaltungsträgerseite des Balkenteils (153; 153a) absteht; und
wobei sich das Gewichtsteil in eine sich von dem Schaltungsträger (140) entfernende Richtung in Richtung eines fernen Endes erstreckt.

3. Körperbewegungsdetektor nach Anspruch 1, ferner aufweisend eine zweite Körperbewegungsdetektionseinheit (150B), die in dem Körpergehäuse (110) fixiert und eingerichtet ist, eine Körperbewegung entlang einer weiteren Detektionsachse (SA2) zu detektieren, wobei
die weitere Detektionsachse (SA2) der zweiten Körperbewegungsdetektionseinheit (150B) in einem zweiten Neigungswinkel, der größer als der erste Neigungswinkel ist, in Bezug auf die Befestigungsfläche (122) des Körpergehäuses (110) geneigt ist;
wobei der zweite Neigungswinkel nicht innerhalb eines weiteren feststellbaren Winkelbereichs der zweiten Körperbewegungsdetektionseinheit (150B) liegt, wobei der weitere feststellbare Winkelbereich im gleichen Ausmaß an beiden Seiten in Bezug auf die dazwischenliegende weitere Detektionsachse vorliegt; und
wobei der feststellbare Winkelbereich der ersten Körperbewegungsdetektionseinheit (150A) und der weitere feststellbare Winkelbereich der zweiten Körperbewegungsdetektionseinheit (150B) zumindest teilweise überlappen.

4. Körperbewegungsdetektor nach Anspruch 3, wobei die weitere Detektionsachse (SA2) der zweiten Körperbewegungsdetektionseinheit (150B) so angeordnet ist, dass sie sich der Befestigungsfläche (122) in Richtung eines oberen Teils des Körpergehäuses (110) nähert.

5. Körperbewegungsdetektor nach Anspruch 3, wobei die erste Körperbewegungsdetektionseinheit (150A) und die zweite Körperbewegungsdetektionseinheit (150B) jeweils ein plattenförmiges Element (151a, 151b) mit einem sich mit der Körperbewegung biegenden Balkenteil (153a, 153b) und ein piezoelektrisches Element (156a, 156b), das an einer Hauptfläche des Balkenteils (153a, 153b) des plattenförmigen Elements (151a, 151b) befestigt ist, umfassen.

6. Körperbewegungsdetektor nach Anspruch 3, ferner aufweisend eine Auswahleinheit (162) zum Auswählen eines Ausgangssignals von der ersten Körperbewegungsdetektionseinheit (150A) oder der zweiten Körperbewegungsdetektionseinheit (150B), um das Ziel der Körperbewegungsdetektion auszuwählen.

7. Körperbewegungsdetektor, umfassend:
ein Körpergehäuse (110), das eine Befestigungsfläche (122) umfasst, die eingerichtet ist, an einer Taille eines ein Körperbewegungsdetektionsobjekt bildenden Benutzers befestigt zu werden, wobei die Befestigungsfläche (122) eingerichtet ist, an der Taille der Benutzers in einem ersten Befestigungszustand, bei dem die Befestigungsfläche (122) parallel zu einer senkrechten Linie (PL) angeordnet ist, und in einem zweiten Befestigungszustand, bei dem die Befestigungsfläche (22) auf geneigte Weise in einem vorbestimmten Winkel δ in Bezug auf die senkrechte Linie (PL) angeordnet ist, befestigt zu werden;
eine erste Körperbewegungsdetektionseinheit (150A) und eine zweite Körperbewegungsdetektionseinheit (150B), die in dem Körpergehäuse (110) fixiert und eingerichtet sind, eine Körperbewegung des Objekts zu detektieren,
wobei die erste Körperbewegungsdetektionseinheit (150A) eine erste Detektionsachse (SA1) innerhalb eines ersten feststellbaren Winkelbereichs α1 umfasst, wobei der erste feststellbare Winkelbereich α1 im gleichen Ausmaß an beiden Seiten in Bezug auf die dazwischenliegende erste Detektionsachse vorliegt, wobei eine Empfindlichkeit der ersten Körperbewegungsdetektionseinheit (150A) maximal ist, wenn die Körperbewegung entlang der ersten Detektionsachse (SA1) stattfindet,
wobei die zweite Körperbewegungsdetektionseinheit (150B) eine zweite Detektionsachse (SA2) innerhalb eines zweiten feststellbaren Winkelbereichs α2 umfasst, wobei der zweite feststellbare Winkelbereich α2 im gleichen Ausmaß an beiden Seiten in Bezug auf die dazwischenliegende zweite Detektionsachse vorliegt und wobei eine Empfindlichkeit der zweiten Körperbewegungsdetektionseinheit (150B) maximal ist, wenn die Körperbewegung entlang der zweiten Detektionsachse (SA2) stattfindet,
**dadurch gekennzeichnet, dass**
die erste Detektionsachse (SA1) der ersten Körperbewegungsdetektionseinheit (150A) parallel zu der Befestigungsfläche (122) des Körpergehäuses (110) ist und
die zweite Detektionsachse (SA2) der zweiten Körperbewegungsdetektionseinheit (150B) in einem Neigungswinkel β in Bezug auf die Befestigungsfläche (122) des Körpergehäuses (110) geneigt ist,
wobei der erste feststellbare Bereich α1 der ersten Körperbewegungsdetektionseinheit (150A) und der zweite feststellbare Bereich α2 der zweiten Körperbewegungsdetektionseinheit (150B) zumindest teilweise überlappen,
wobei die erste Detektionsachse und die zweite Detektionsachse derart angeordnet sind, dass bei dem ersten Befestigungszustand die erste Detektionsachse parallel zu der senkrechten Linie (PL) ist, so dass die Richtung der senkrechten Linie (PL) in dem ersten feststellbaren Winkelbereich α1 vorliegt, und bei dem zweiten Befestigungszustand, der die Bedingung (β-α2)≤δ≤(β+α2) erfüllt, die zweite Detektionsachse die senkrechte Linie in einem Winkel β-δ schneidet, so dass die Richtung der senkrechten Linie (PL) in dem zweiten feststellbaren Winkelbereich α2 vorliegt,
wobei jedes Element aus der ersten Körperbewegungsdetektionseinheit (150A) und der zweiten Körperbewegungsdetektionseinheit (150B) ein plattenförmiges Element (151a; 151b) mit einem sich mit der Körperbewegung biegenden Balkenteil (153a; 153b) und ein piezoelektrisches Element, das an einer Hauptfläche des Balkenteils (153a; 153b) des plattenförmigen Elements (151a; 151b) befestigt ist, umfasst, und
die erste Körperbewegungsdetektionseinheit (150A) und die zweite Körperbewegungsdetektionseinheit (150B) an einem Schaltungsträger (140), der innerhalb des Körpergehäuses (110) aufgenommen und fixiert ist, befestigt sind, wobei eine Ebene, die parallel zu der Hauptfläche des Balkenteils (153b) der zweiten Körperbewegungsdetektionseinheit (150B) ist, in dem Neigungswinkel β in Bezug auf eine Normalen der Hauptfläche des Schaltungsträgers (140) geneigt ist und die Hauptfläche des Schaltungsträgers (140) parallel zu der Normalen der Befestigungsfläche (122) des Körpergehäuses (110) ist.

8. Körperbewegungsdetektor nach Anspruch 7, wobei
das Balkenteil (153b) der zweiten Körperbewegungsdetektionseinheit (150B) ein Gewichtsteil umfasst, das von einem Ende des Balkenteils (153b) an der Schaltungsträgerseite des Balkenteils (153b) absteht; und
das Gewichtsteil sich in eine sich von dem Schaltungsträger (140) entfernende Richtung in Richtung eines fernen Endes erstreckt.

9. Körperbewegungsdetektor nach Anspruch 7, ferner aufweisend eine Auswahleinheit (162) zum Auswählen eines Ausgangssignals von der ersten Körperbewegungsdetektionseinheit (150A) oder der zweiten Körperbewegungsdetektionseinheit (150B), um das Ziel der Körperbewegungsdetektion auszuwählen.

## Revendications

1. Détecteur de mouvements du corps comprenant :
une enceinte de corps (110) qui possède une surface de fixation (122) configurée pour être fixée sur la taille d'un utilisateur qui est l'objet de la détection de mouvements du corps, la surface de fixation (122) étant configurée pour être fixée sur la taille de l'utilisateur dans un premier état de fixation dans lequel la surface de fixation (122) est placée parallèlement à une ligne perpendiculaire (PL), et dans un second état de fixation dans lequel la surface de fixation (122) est placée de manière inclinée à un angle prédéterminé 5 par rapport à la ligne perpendiculaire (PL) ;
une première unité de détection de mouvements du corps (150 ; 150A) fixée dans l'enceinte de corps (110) et configurée pour détecter un mouvement de corps de l'objet, la première unité de détection de mouvements du corps (150 ; 150A) ayant un axe de détection (SA ; SA1) sur une plage d'angles détectables α, la plage d'angles détectables existant dans la même mesure des deux côtés avec l'axe de détection entre ceux-ci, une sensibilité de la première unité de détection de mouvements du corps (150 ; 150A) étant maximale lorsque le mouvement du corps se produit le long de l'axe de détection (SA ; SA1),
**caractérisé en ce que**
l'axe de détection (SA) de la première unité de détection de mouvements du corps (150 ; 150A) est incliné à un premier angle d'inclinaison β par rapport à la surface de fixation (122) de l'enceinte de corps (110) de sorte que, dans le premier état de fixation, le premier angle d'inclinaison β se trouve sur la plage d'angles détectables α de sorte que la direction de la ligne perpendiculaire (PL) existe sur la plage d'angles détectables α,
et, dans le second état de fixation qui remplit la condition (β-α)≤δ≤(β+α), l'axe de détection (SA ; SA1) intersecte la ligne perpendiculaire à un angle β-δ de sorte que la direction de la ligne perpendiculaire (PL) existe sur la plage d'angles détectables α,
la première unité de détection de mouvements du corps (150 ; 150A) comprend un élément en forme de plaque (151 ; 151a) avec une partie de traverse (153 ; 153a) qui se courbe avec le mouvement du corps, et un élément piézoélectrique (156 ; 156a) relié à une surface principale de la partie de traverse (153 ; 153a) de l'élément en forme de plaque (151 ; 151a), et
la première unité de détection de mouvements du corps (150 ; 150A) est fixée sur un substrat de câblage (140) placé et fixé à l'intérieur de l'enceinte de corps (110), la surface principale de la partie de traverse (153 ; 153a) est inclinée au premier angle d'inclinaison β par rapport à la normale d'une surface principale du substrat de câblage (140), et la surface principale du substrat de câblage (140) est parallèle à la surface de fixation (122) de l'enceinte de corps (110).

2. Détecteur de mouvements du corps selon la revendication 1, dans lequel
la partie de traverse (153 ; 153a) comprend une partie de poids qui part à la verticale depuis une extrémité de la partie de traverse (153 ; 153a) côté substrat de câblage de la partie de traverse (153 ; 153a) ; et
la partie de poids s'étend dans une direction qui s'éloigne du substrat de câblage (140), vers une extrémité distale.

3. Détecteur de mouvements du corps selon la revendication 1, qui comprend en outre une seconde unité de détection de mouvements du corps (150B) fixée dans l'enceinte de corps (110) et configurée pour détecter un mouvement du corps le long d'un autre axe de détection (SA2), dans lequel
l'autre axe de détection (SA2) de la seconde unité de détection de mouvements du corps (150B) est incliné à un second angle d'inclinaison supérieur au premier angle d'inclinaison par rapport à la surface de fixation (122) de l'enceinte de corps (110) ;
le second angle d'inclinaison ne se trouve pas sur une plage d'angles détectables de la seconde unité de détection de mouvements du corps (150B), l'autre plage d'angles détectables existant dans la même mesure des deux côtés avec l'autre axe de détection situé entre ceux-ci ; et
la plage d'angles détectables de la première unité de détection de mouvements du corps (150A) et l'autre plage d'angles détectables de la seconde unité de détection de mouvements du corps (150B) se chevauchent au moins partiellement.

4. Détecteur de mouvements du corps selon la revendication 3, dans lequel l'autre axe de détection (SA2) de la seconde unité de détection de mouvements du corps (150B) est prévu de façon à être plus proche de la surface de fixation (122) vers une partie supérieure de l'enceinte de corps (110).

5. Détecteur de mouvements du corps selon la revendication 3, dans lequel la première unité de détection de mouvements du corps (150A) et la seconde unité de détection de mouvements du corps (150B) comprennent respectivement un élément en forme de plaque (151a, 151b) avec une partie de traverse (153a, 153b) qui se courbe avec le mouvement du corps, et un élément piézoélectrique (156a, 156b) relié à une surface principale de la partie de traverse (153a, 153b) de l'élément en forme de plaque (151a, 151b).

6. Détecteur de mouvements du corps selon la revendication 3, qui comprend en outre une unité de sélection (162) destinée à sélectionner un signal de sortie qui provient de la première unité de détection de mouvements du corps (150A) ou de la seconde unité de détection de mouvements du corps (150B) afin de le sélectionner pour la cible de la détection de mouvements du corps.

7. Détecteur de mouvements du corps comprenant :
une enceinte de corps (110) qui comprend une surface de fixation (122) configurée pour être fixée sur la taille d'un utilisateur qui est l'objet de la détection de mouvements du corps, la surface de fixation (122) étant configurée pour être fixée sur la taille de l'utilisateur dans un premier état de fixation dans lequel la surface de fixation (122) est placée parallèlement à une ligne perpendiculaire (PL), et dans un second état de fixation dans lequel la surface de fixation (122) est placée de manière inclinée à un angle prédéterminé δ par rapport à la ligne perpendiculaire (PL) ;
une première unité de détection de mouvements du corps (150A) et une seconde unité de détection de mouvements du corps (150B) qui sont fixées dans l'enceinte de corps (110) et configurées pour détecter un mouvement de corps de l'objet,
la première unité de détection de mouvements du corps (150A) ayant un premier axe de détection (SA1) sur une première plage d'angles détectables α1, la première plage d'angles détectables α1 existant dans la même mesure des deux côtés avec le premier axe de détection entre ceux-ci, une sensibilité de la première unité de détection de mouvements du corps (150A) étant maximale lorsque le mouvement du corps se produit le long du premier axe de détection (SA1),
la seconde unité de détection de mouvements du corps (150B) ayant un second axe de détection (SA2) sur une seconde plage d'angles détectables α2, la seconde plage d'angles détectables α2 existant dans la même mesure des deux côtés, avec le second axe de détection entre ceux-ci, une sensibilité de la seconde unité de détection de mouvements du corps (150B) étant maximale lorsque le mouvement du corps se produit le long du second axe de détection (SA2),
**caractérisé en ce que**
le premier axe de détection (SA1) de la première unité de détection de mouvements du corps (150A) est parallèle à la surface de fixation (122) de l'enceinte de corps (110), et
le second axe de détection (SA2) de la seconde unité de détection de mouvements du corps (150B) est incliné à un angle d'inclinaison β par rapport à la surface de fixation (122) de l'enceinte de corps (110),
la première plage d'angles détectables α1 de la première unité de détection de mouvements du corps (150A) et la seconde plage détectable α2 de la seconde unité de détection de mouvements du corps (150B) se chevauchent au moins partiellement,
le premier axe de détection et le second axe de détection sont placés de sorte que, dans le premier état de fixation, le premier axe de détection soit parallèle à la ligne perpendiculaire (PL) de sorte que la direction de lia ligne perpendiculaire (PL) existe sur la première plage d'angles détectables α1, et, dans le second état de fixation qui remplit la condition (β-α2)≤δ≤(β+α2), le second axe de détection intersecte la ligne perpendiculaire à un angle β-δ de sorte que la direction de la ligne perpendiculaire (PL) existe sur la seconde plage d'angles détectables α2,
chacune de la première unité de détection de mouvements du corps (150A) et de la seconde unité de détection de mouvements du corps (150B) comprend un élément en forme de plaque (151a, 151b) avec une partie de traverse (153a, 153b) qui se courbe avec le mouvement du corps, et un élément piézoélectrique relié à une surface principale de la partie de traverse (153a, 153b) de l'élément en forme de plaque (151a, 151b), et
la première unité de détection de mouvements du corps (150A) et la seconde unité de détection de mouvements du corps (150B) sont fixées sur un substrat de câblage (140) placé et fixé à l'intérieur de l'enceinte de corps (110), un plan parallèle à la surface principale de la partie de traverse (153b) de la seconde unité de détection de mouvements du corps (150B) est incliné à l'angle d'inclinaison β par rapport à la normale de la surface principale du substrat de câblage (140), et la surface principale du substrat de câblage (140) est parallèle à la normale de la surface de fixation (122) de l'enceinte de corps (110).

8. Détecteur de mouvements du corps selon la revendication 7, dans lequel
la partie de traverse (153b) de la seconde unité de détection de mouvements du corps (150B) comprend une partie de poids qui part à la verticale depuis une extrémité de la partie de traverse (153b) côté substrat de câblage de la partie de traverse (153b) ; et
la partie de poids s'étend dans une direction qui s'éloigne du substrat de câblage (140), vers une extrémité distale.

9. Détecteur de mouvements du corps selon la revendication 7, qui comprend en outre une unité de sélection (162) destinée à sélectionner un signal de sortie qui provient de la première unité de détection de mouvements du corps (150A) ou de la seconde unité de détection de mouvements du corps (150B) à sélectionner pour la cible de la détection de mouvements du corps.
